# EUROPEAN PATENT APPLICATION

(11) **EP 3 595 312 A1**
(43) Date of publication of application: **15.01.2020**
(21) Application number: 18763157.7
(22) Date of filing: 23.02.2018
(51) Int. Cl.: H04N 19/51, H04N 19/587, H04N 19/70

(54) **IMAGE PROCESSING DEVICE AND METHOD**

(30) Priority: 10.03.2017 JP 2017045769
(71) Applicant: Sony Corporation, Tokyo 108-0075 (JP)
(72) Inventor: KONDO, Kenji, Tokyo 108-0075 (JP)
(74) Representative: D Young & Co LLP
(86) International application number: PCT/JP2018/006635
(87) International publication number: WO 2018/163857

(57) **Abstract**

The present technology relates to an image processing apparatus and an image processing method which are able to achieve an additional improvement in coding efficiency.

An image processing apparatus includes a predicting unit configured to, when performing a process of generating a prediction image from a block to be encoded using a reference image, determine whether or not a bilateral matching based on reference images at mutually different times can be employed to derive a motion vector of the block with a block matching using the reference image. The present technology is applicable to, for example, an image encoding apparatus and an image decoding apparatus.

## Description

### [Technical Field]

The present technology relates to an image processing apparatus and an image processing method, and, in particular, relates to an image processing apparatus and an image processing method which are able to achieve an additional improvement in coding efficiency.

### [Background Art]

For example, a technique called FRUC (Frame Rate Up Conversion) has been proposed as a technique related to encoding and decoding of an image. This FRUC technique is a technique proposed by the JVET (Joint Video Exploration Team), and in the FRUC technique, motion information is estimated on a decoder side at the time of inter prediction (see, for example, NPL 1).

In the FRUC technique, a block matching process is performed with a template matching method or a bilateral matching method in a decoder to derive motion information. When the motion information is thus derived in the decoder, a reduction in information related to the motion information stored in a bit stream can be achieved.

### [Citation List]

### [Non Patent Literature]

[NPL 1]
Joint Video Exploration Team (JVET) of ITU-T SG 16 WP 3 and ISO/IEC JTC 1/SC 29/WG 11, "Algorithm Description of Joint Exploration Test Model 4," JVET-D1001_v3, 4th Meeting: Chengdu, CN, 15-21 October 2016

### [Summary]

### [Technical Problem]

Here, in the case where the FRUC technique is used, a block matching process employing the bilateral matching method cannot be used where there is only one frame to be searched for a match. Therefore, in this case, the decoder may add, to a bit stream, information indicating that the template matching method is always to be employed, for example, but sending of such information would be transmission of a useless code, resulting in a deterioration in the coding efficiency.

Accordingly, there has been a demand for a technique to avoid such transmission of a useless code to achieve an improvement in the coding efficiency.

The present technology has been conceived in view of the above circumstances to achieve an additional improvement in the coding efficiency.

### [Solution to Problem]

An image processing apparatus according to one aspect of the present technology includes a predicting unit configured to, when performing a process of generating a prediction image from a block to be encoded using a reference image, determine whether or not a bilateral matching based on reference images at mutually different times may be employed to derive a motion vector of the block with a block matching using the reference image.

An image processing method according to one aspect of the present technology corresponds to the image processing apparatus according to one aspect of the present technology.

In one aspect of the present technology, when a process of generating a prediction image from a block to be encoded using a reference image is performed, it is determined whether or not a bilateral matching based on reference images at mutually different times may be employed to derive a motion vector of the block with a block matching using the reference image.

### [Advantageous Effect of Invention]

According to one aspect of the present technology, an additional improvement in coding efficiency can be achieved.

Note that the advantageous effect mentioned above is not necessarily restrictive, and that any of the advantageous effects described in the present disclosure may be achieved.

### [Brief Description of Drawings]

[FIG. 1]

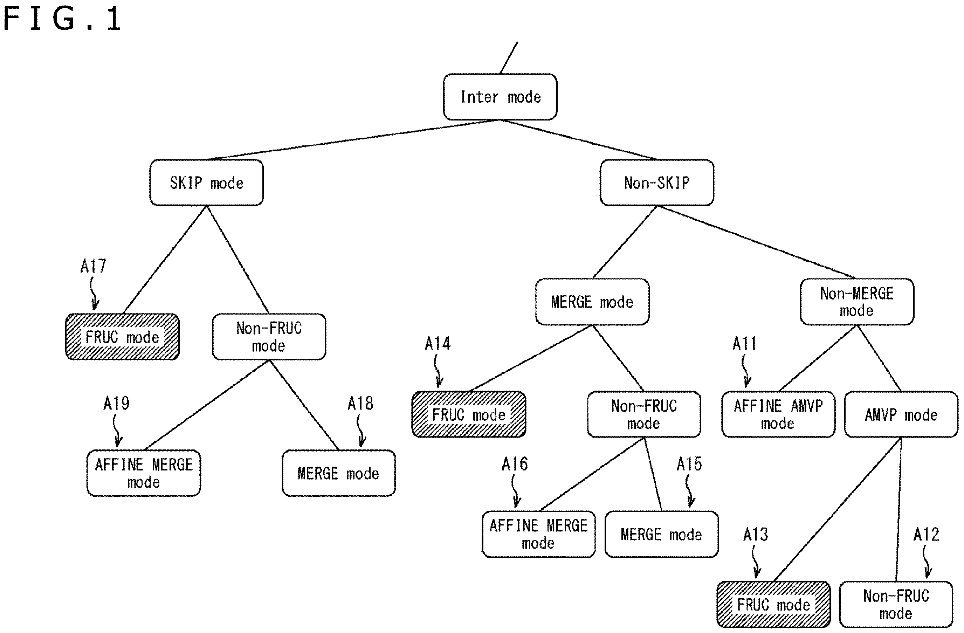

   FIG. 1 is a diagram for explaining inter prediction modes.
[FIG. 2]

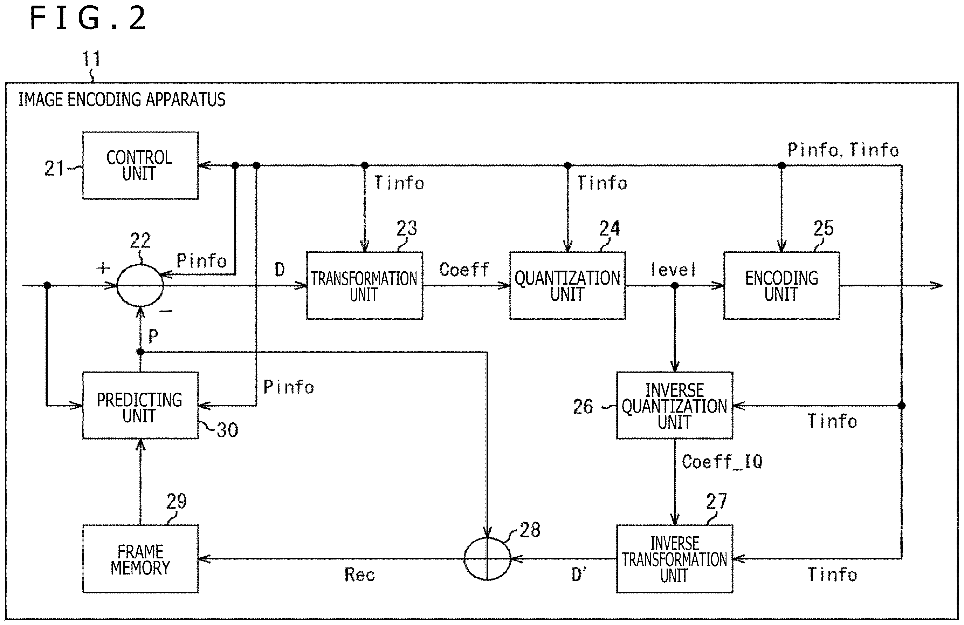

   FIG. 2 is a diagram illustrating an exemplary configuration of an image encoding apparatus.
[FIG. 3]

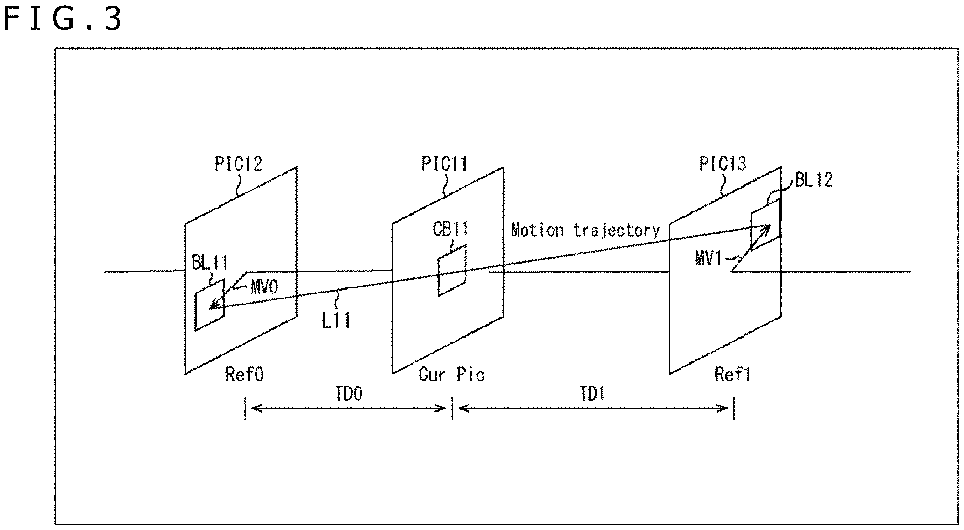

   FIG. 3 is a diagram for explaining bilateral matching.
[FIG. 4]

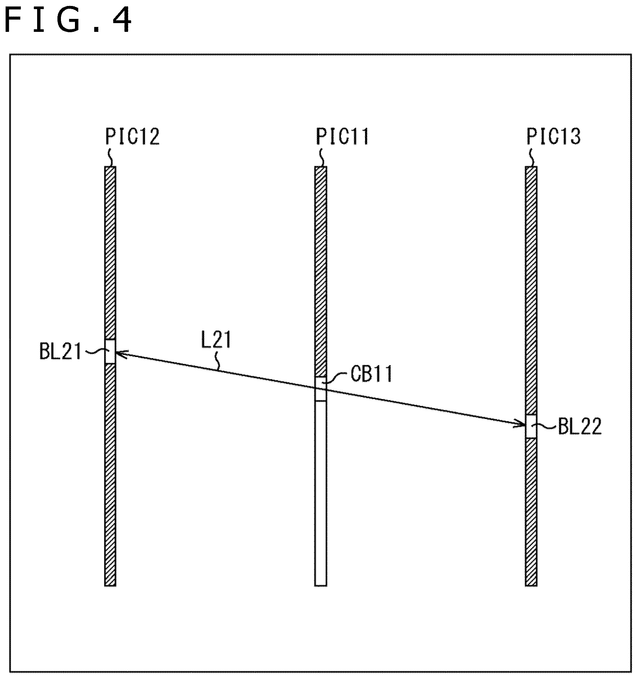

   FIG. 4 is another diagram for explaining the bilateral matching.
[FIG. 5]

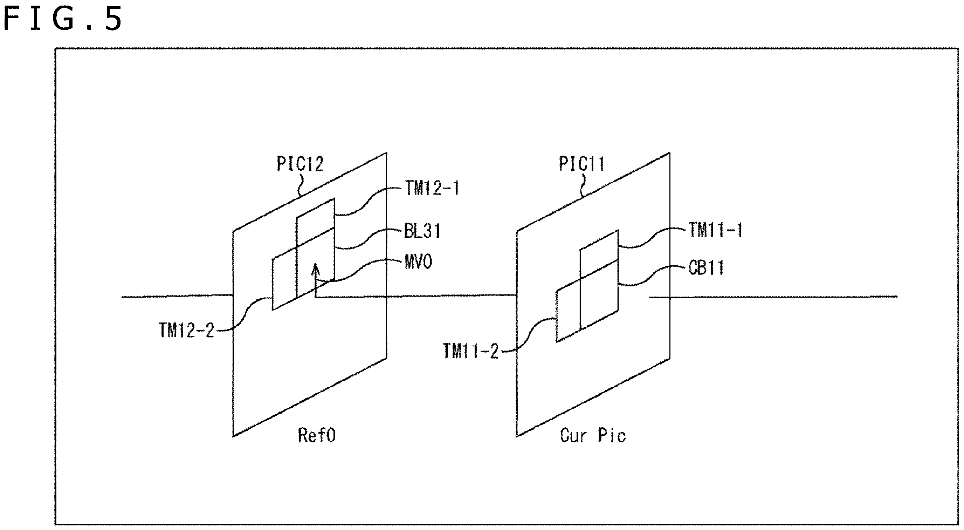

   FIG. 5 is a diagram for explaining template matching.
[FIG. 6]

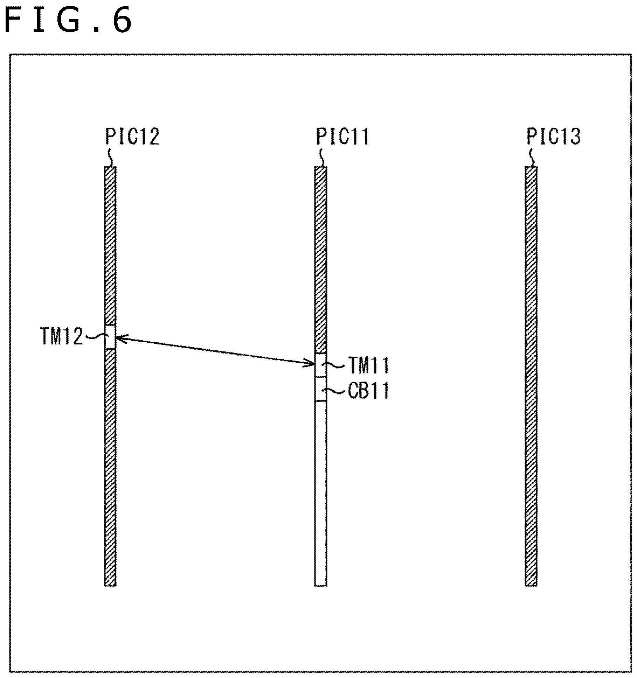

   FIG. 6 is another diagram for explaining the template matching.
[FIG. 7]

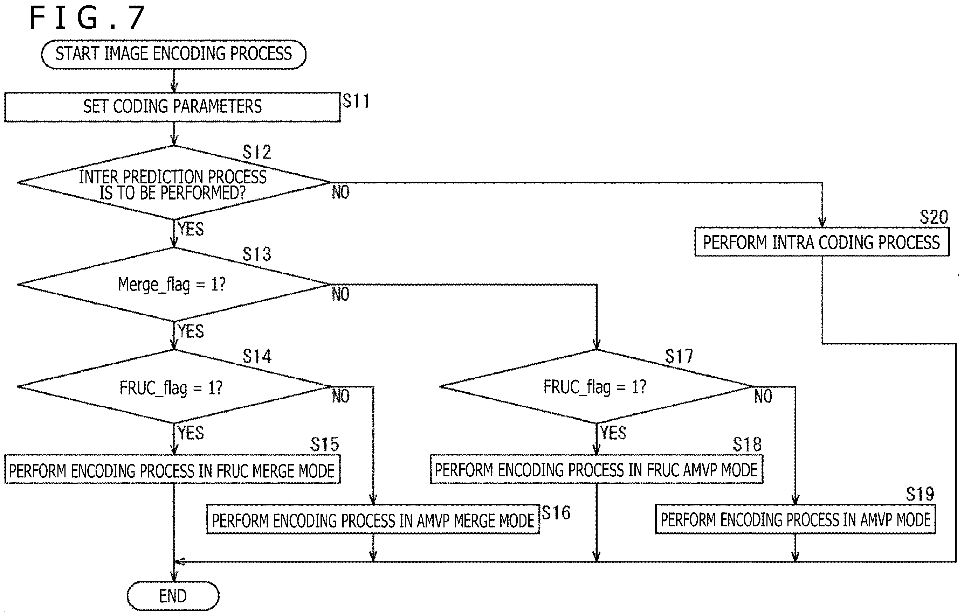

   FIG. 7 is a flowchart for explaining an image encoding process.
[FIG. 8]

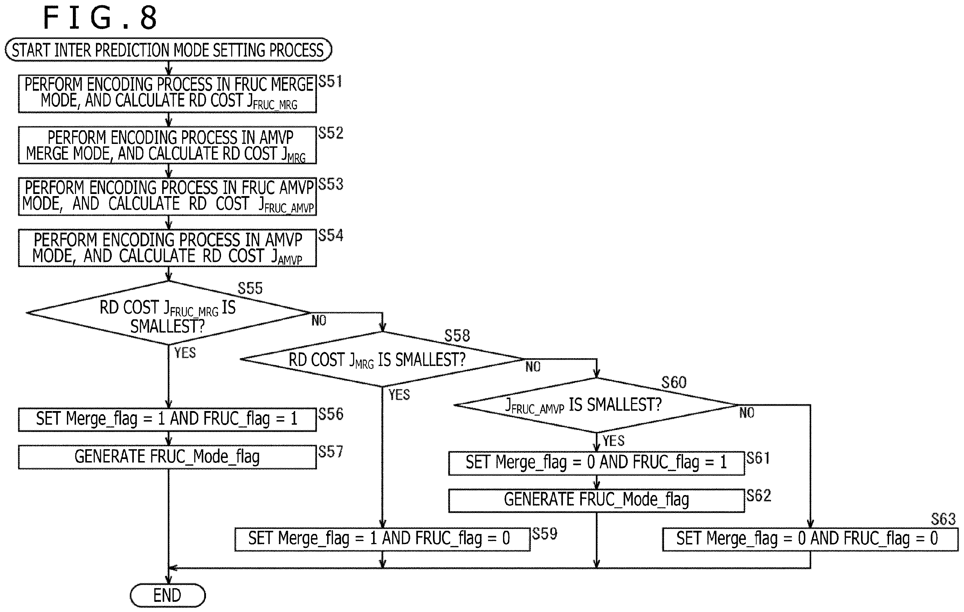

   FIG. 8 is a flowchart for explaining an inter prediction mode setting process.
[FIG. 9]

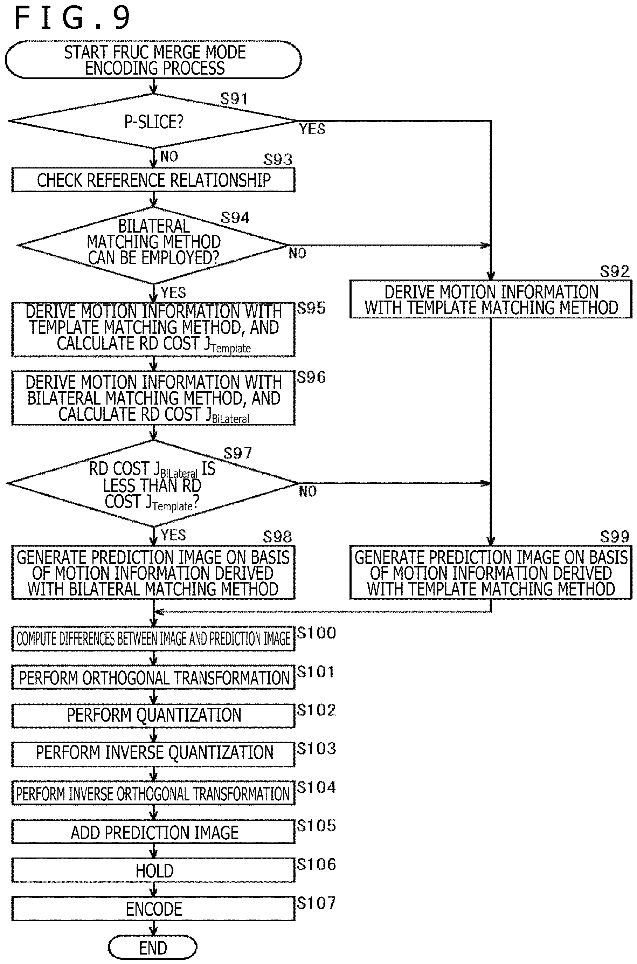

   FIG. 9 is a flowchart for explaining a FRUC MERGE mode encoding process.
[FIG. 10]

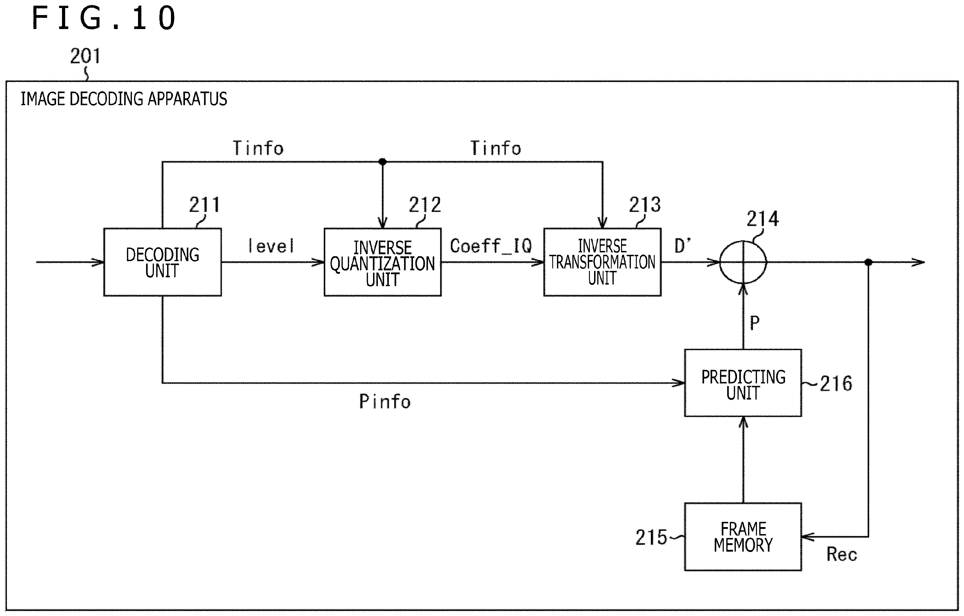

   FIG. 10 is a diagram illustrating an exemplary configuration of an image decoding apparatus.
[FIG. 11]

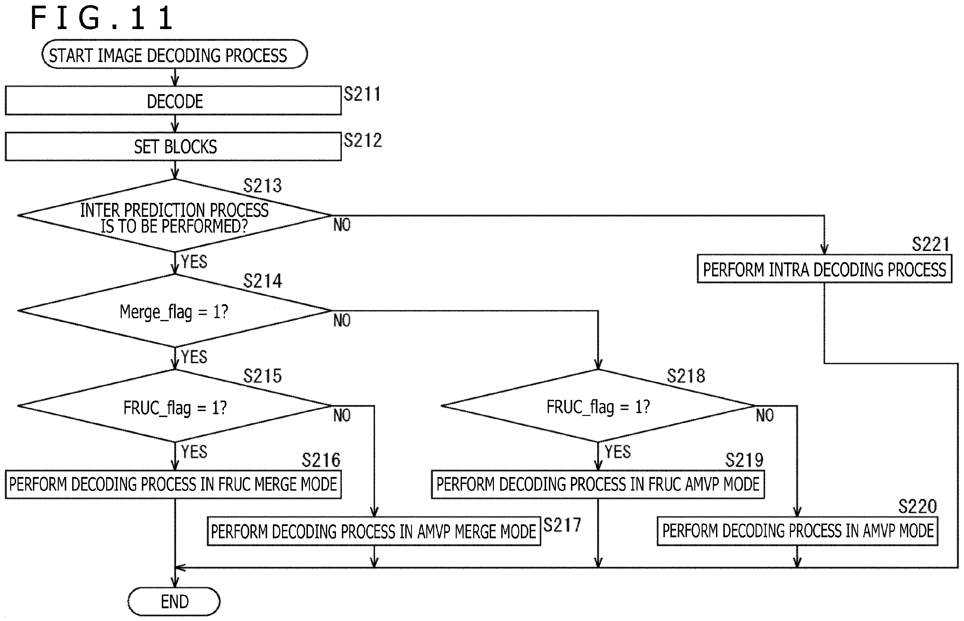

   FIG. 11 is a flowchart for explaining an image decoding process.
[FIG. 12]

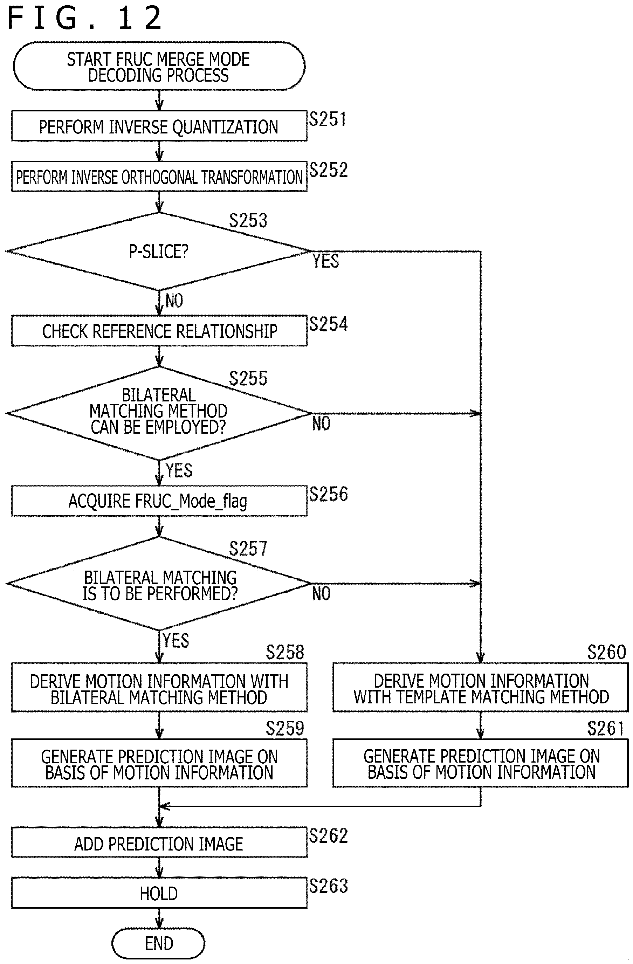

   FIG. 12 is a flowchart for explaining a FRUC MERGE mode decoding process.
[FIG. 13]

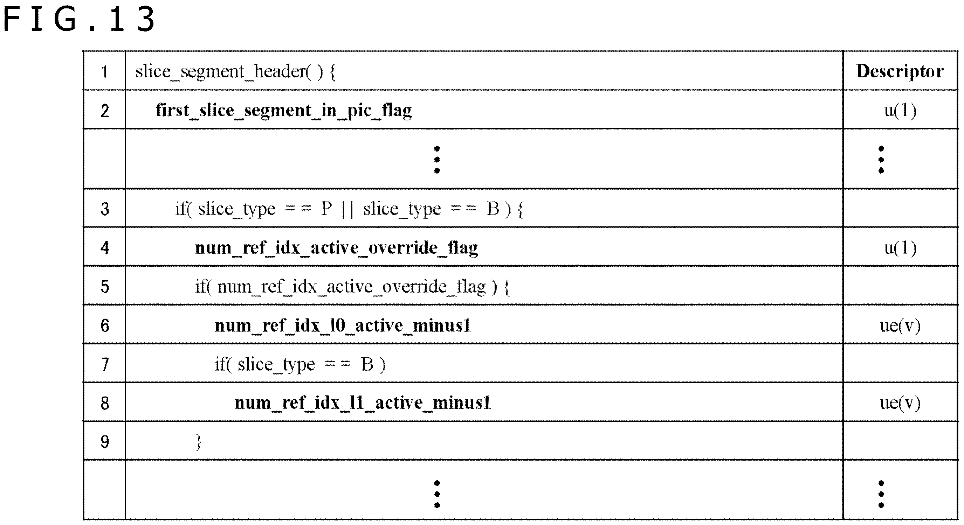

   FIG. 13 is a diagram illustrating an example syntax of a slice header.
[FIG. 14]

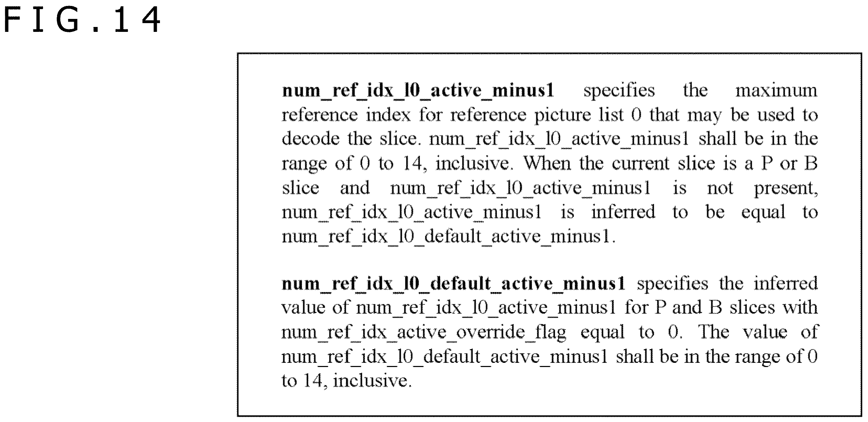

   FIG. 14 is a diagram illustrating details of num_ref_idx_10_active_minus1.
[FIG. 15]

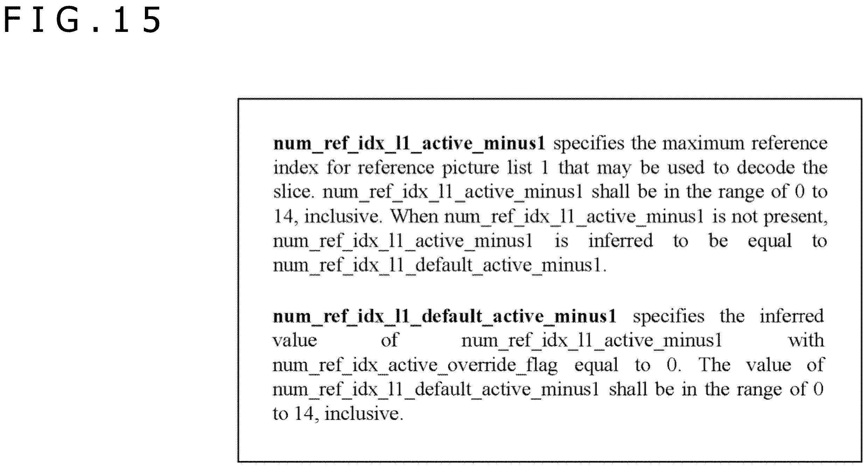

   FIG. 15 is a diagram illustrating details of num_ref_idx_l1_active_minus1.
[FIG. 16]

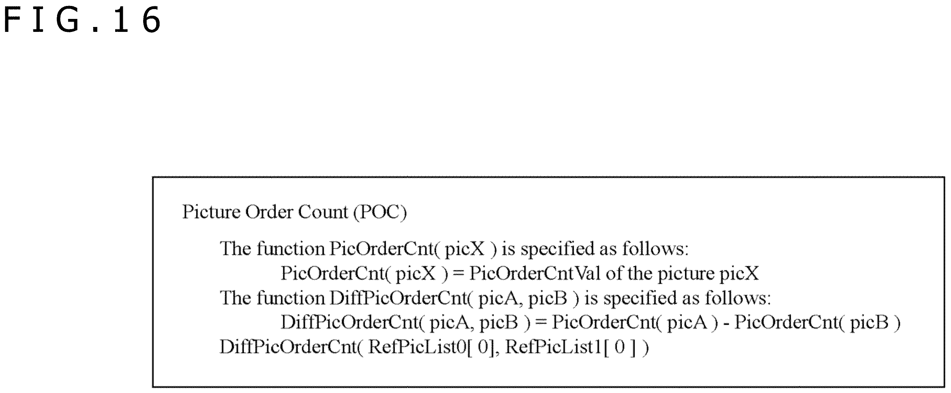

   FIG. 16 is a diagram for explaining a POC.
[FIG. 17]

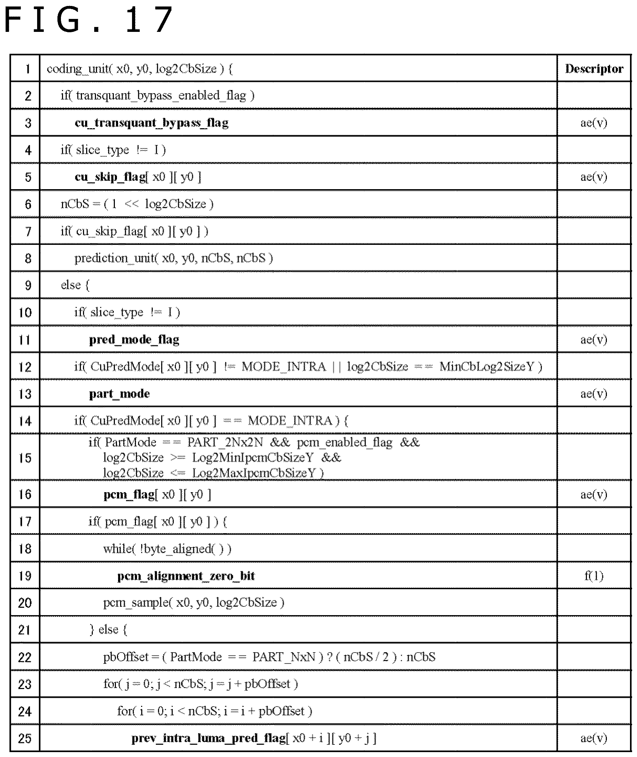

   FIG. 17 is a diagram illustrating an example syntax of a coding unit.
[FIG. 18]

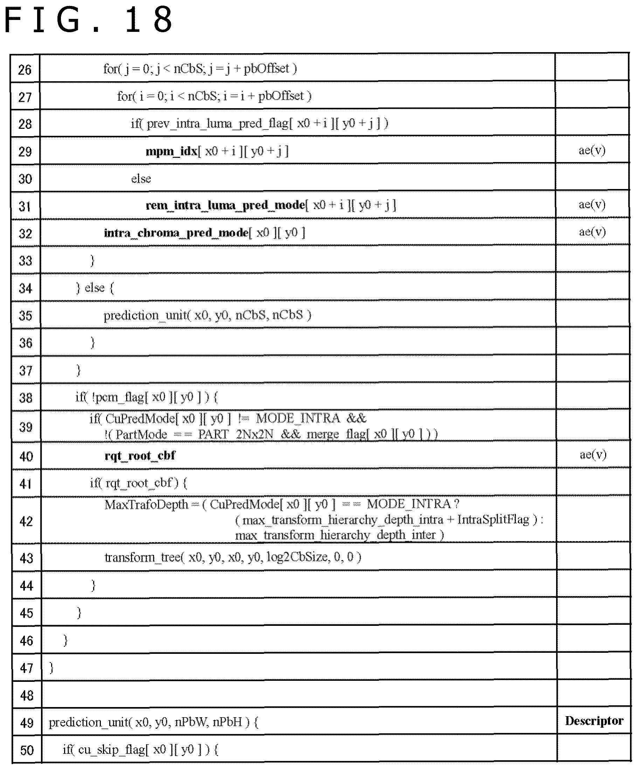

   FIG. 18 is a diagram illustrating the example syntax of the coding unit.
[FIG. 19]

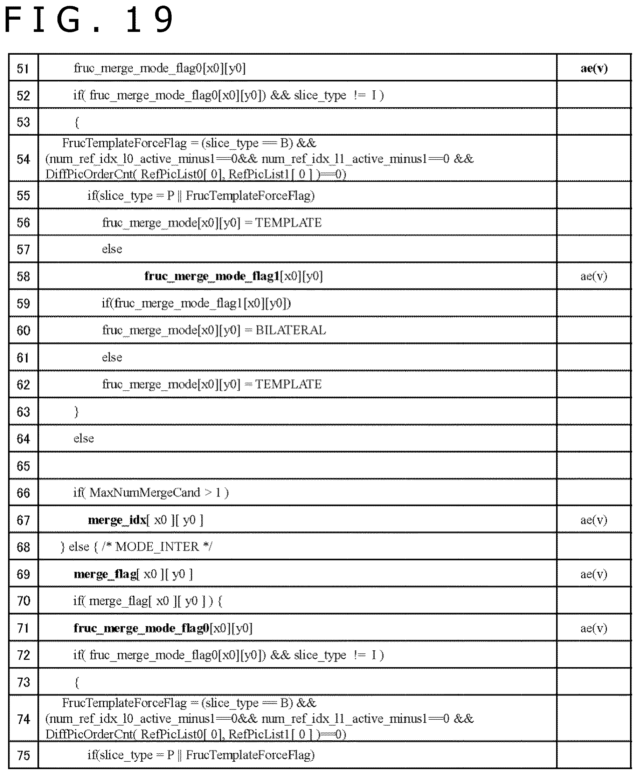

   FIG. 19 is a diagram illustrating the example syntax of the coding unit.
[FIG. 20]

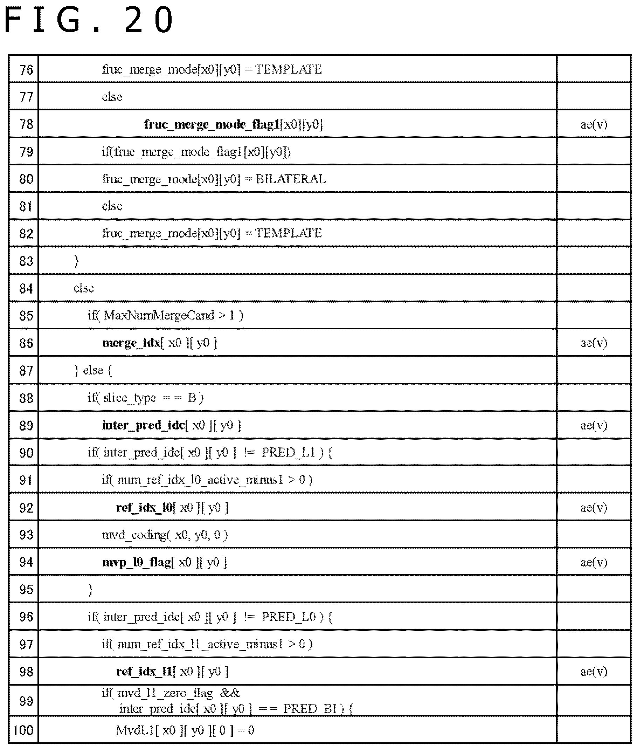

   FIG. 20 is a diagram illustrating the example syntax of the coding unit.
[FIG. 21]

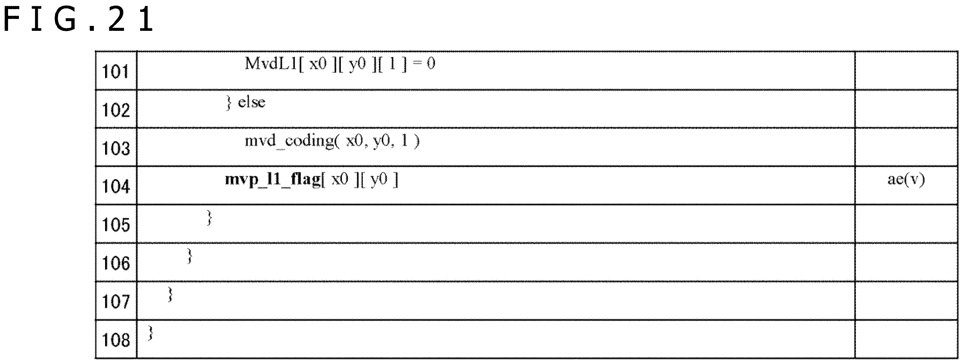

   FIG. 21 is a diagram illustrating the example syntax of the coding unit.
[FIG. 22]

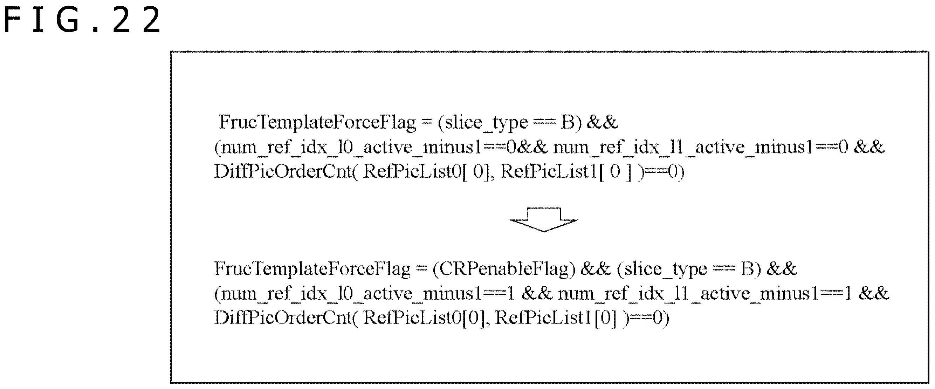

   FIG. 22 is a diagram for explaining a condition for not transmitting fruc_merge_mode_flag1.
[FIG. 23]

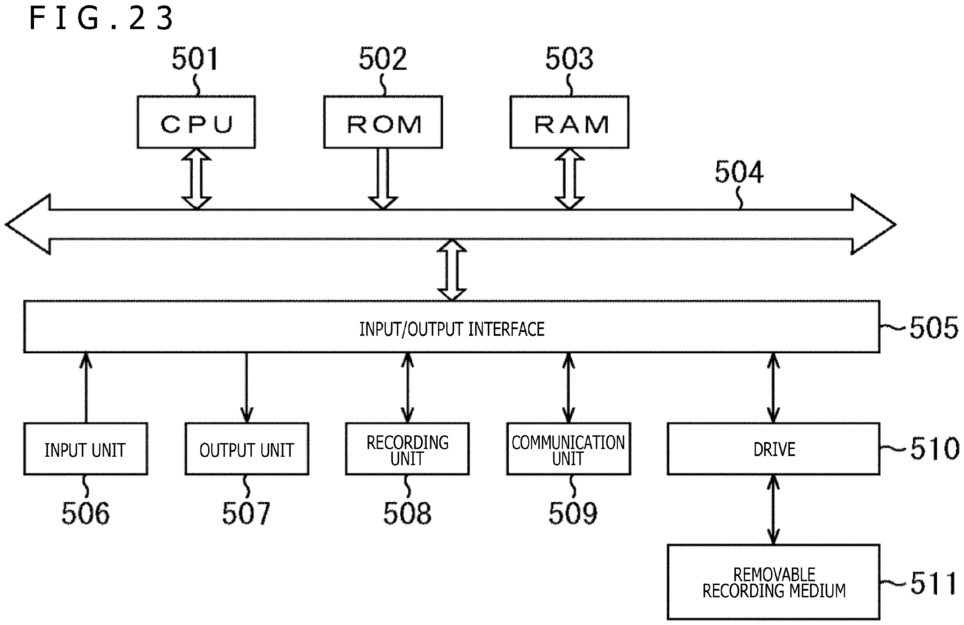

   FIG. 23 is a diagram illustrating an exemplary configuration of a computer.

### [Description of Embodiments]

Hereinafter, embodiments to which the present technology has been applied will be described with reference to the accompanying drawings.

### <First Embodiment>

### <Types of Inter Prediction Modes>

In the present technology, a moving image to be processed is encoded and decoded using an inter prediction mode or an intra prediction mode.

When the moving image is encoded or decoded, pictures which correspond to frames that constitute the moving image are encoded or decoded on the basis of processing units (coding units) called CUs (Coding Units).

The CUs are blocks of variable sizes which are formed by recursively dividing a CTU (Coding Tree Unit), which is the largest coding unit. Hereinafter, unless otherwise noted, CTUs will be referred to simply as CUs, and CUs obtained by dividing a CTU will be referred to as sub-blocks. In addition, hereinafter, the CUs and the sub-blocks will be referred to simply as blocks unless they need to be distinguished from each other.

Further, there are a plurality of inter prediction modes, examples of which are illustrated in FIG. 1, and the encoding and decoding will be performed in accordance with one of the plurality of modes.

In the example illustrated in FIG. 1, the inter prediction modes can be classified into SKIP modes and Non-SKIP modes.

In each Non-SKIP mode, a bit stream obtained by an encoding process has stored therein prediction residuals, which are image differences between blocks within a picture and corresponding reference blocks within a reference picture which is referred to. In contrast, in each SKIP mode, the prediction residuals are not stored in a bit stream.

In addition, the Non-SKIP modes can be further classified into MERGE modes and Non-MERGE modes. In each Non-MERGE mode, a bit stream obtained by an encoding process has stored therein difference motion vectors, which represent errors in prediction motion vectors obtained with respect to blocks within a picture. In contrast, in each MERGE mode, the difference motion vectors are not stored in a bit stream.

Further, the Non-MERGE modes within the Non-SKIP modes include an AFFINE AMVP (Advanced Motion Vector Prediction) mode indicated by arrow A11, a Non-FRUC mode indicated by arrow A12, i.e., a normal AMVP mode, and a FRUC mode indicated by arrow A13.

The AFFINE AMVP mode is a mode in which an affine transformation is used to derive motion information. An AMVP mode is a mode in which a bit stream has stored therein, with respect to the blocks within a picture, the prediction residuals, candidates for the prediction motion vectors used to obtain the prediction motion vectors, and the difference motion vectors. That is, as the motion information, the candidates for the prediction motion vectors and the difference motion vectors are stored in the bit stream.

Here, as information indicating the candidate for the prediction motion vector, an index or the like indicating one of a plurality of surrounding regions around a block to be processed is stored in the bit stream. In the AMVP mode, at the time of a decoding process, a vector obtained by adding the difference motion vector to the prediction motion vector of the surrounding region determined to be the candidate for the prediction motion vector is used as the motion vector of the block to be processed.

Meanwhile, the FRUC mode indicated by arrow A13 is a mode in which, with respect to the blocks within a picture, FRUC_Mode_flag, which indicates which of a template matching method and a bilateral matching method is employed to derive the motion information, the prediction residuals, and the difference motion vectors are stored in a bit stream. This FRUC mode is a mode in which the motion information is derived on a decoder side with the AMVP mode as a basic mode. Hereinafter, the FRUC mode indicated by arrow A13 will be referred to also as a FRUC AMVP mode in particular.

Further, the MERGE modes within the Non-SKIP modes include a FRUC mode indicated by arrow A14, a MERGE mode using AMVP indicated by arrow A15, and an AFFINE MERGE mode indicated by arrow A16.

The FRUC mode indicated by arrow A14 is a mode in which, with respect to the blocks within a picture, FRUC_Mode_flag and the prediction residuals are stored in a bit stream. Hereinafter, the FRUC mode indicated by arrow A14 will be referred to also as a FRUC MERGE mode in particular.

The MERGE mode using AMVP indicated by arrow A15 is a mode in which, with respect to the blocks within a picture, the prediction residuals and the candidates for the prediction motion vectors are stored in a bit stream. Hereinafter, this MERGE mode will be referred to also as an AMVP MERGE mode in particular.

The AFFINE MERGE mode indicated by arrow A16 is different from the AFFINE AMVP mode indicated by arrow A11 in that the difference motion vectors are not stored in a bit stream.

Further, the SKIP modes can be classified into a FRUC mode and Non-FRUC modes. More specifically, the SKIP modes include a FRUC mode indicated by arrow A17, a MERGE mode indicated by arrow A18, and an AFFINE MERGE mode indicated by arrow A19.

The FRUC mode indicated by arrow A17 is a mode in which, with respect to the blocks within a picture, FRUC_Mode_flag is stored in a bit stream. Hereinafter, the FRUC mode indicated by arrow A17 will be referred to also as a SKIP FRUC mode in particular.

The MERGE mode indicated by arrow A18 is a mode in which, with respect to the blocks within a picture, the candidates for the prediction motion vectors are stored in a bit stream. Hereinafter, this MERGE mode will be referred to also as a SKIP MERGE mode in particular.

The AFFINE MERGE mode indicated by arrow A19 is different from the AFFINE MERGE mode indicated by arrow A16 in that the prediction residuals are not stored in a bit stream.

In the present technology, one of the modes indicated by arrows A11 to A19 in FIG. 1 is selected on an encoder side, and blocks on a picture are encoded. To facilitate the following description, it is assumed here that the mode used when encoding each block is selected from among the AMVP mode, the FRUC AMVP mode, the AMVP MERGE mode, and the FRUC MERGE mode, and that none of the SKIP modes and the modes related to the affine transformation is selected.

### <Exemplary Configuration of Image Encoding Apparatus>

Next, an image encoding apparatus as an image processing apparatus to which the present technology has been applied will be described below.

FIG. 2 is a diagram illustrating an exemplary configuration of one embodiment of an image encoding apparatus to which the present technology has been applied.

An image encoding apparatus 11 illustrated in FIG. 2 is an encoder that encodes a prediction residual between an image and a prediction image thereof as in AVC (Advanced Video Coding) and HEVC (High Efficiency Video Coding). The image encoding apparatus 11 implements, for example, the HEVC technology or a technology proposed by JVET.

Note that major ones, and not necessarily all, of processing sections, data flows, and so on are illustrated in FIG. 2. In other words, in the image encoding apparatus 11, a processing section which is not illustrated as a block in FIG. 2 may exist, or a process or data flow which is not indicated by an arrow or the like in FIG. 2 may occur.

The image encoding apparatus 11 includes a control unit 21, a computation unit 22, a transformation unit 23, a quantization unit 24, an encoding unit 25, an inverse quantization unit 26, an inverse transformation unit 27, a computation unit 28, a frame memory 29, and a predicting unit 30. The image encoding apparatus 11 encodes a picture of a frame-based moving image, which is inputted, on a CU or sub-block basis.

Specifically, the control unit 21 of the image encoding apparatus 11 sets coding parameters including header information Hinfo, prediction information Pinfo, transformation information Tinfo, etc., on the basis of an input from an outside or the like.

The header information Hinfo includes, for example, a video parameter set (VPS), a sequence parameter set (SPS), a picture parameter set (PPS), a slice header (SH), and other information.

The prediction information Pinfo includes, for example, a split flag, which indicates whether or not a horizontal or a vertical division is performed on each of division levels when sub-blocks (PUs (Prediction Units)) are formed. In addition, the prediction information Pinfo includes mode information pred_mode_flag, which indicates which of an intra prediction process and an inter prediction process is performed as a prediction process for each of blocks.

In the case where the mode information pred_mode_flag indicates the inter prediction process, the prediction information Pinfo includes Merge_flag, FRUC_flag, FRUC_Mode_flag, motion vector information, reference image identification information for identifying a reference image (a reference picture), etc.

Merge_flag is flag information which indicates whether or not the mode of the inter prediction process is a MERGE mode. For example, in the case where the mode is a MERGE mode, the value of Merge_flag is set to 1, while where the mode is not a MERGE mode, the value of Merge_flag is set to 0.

FRUC_flag is flag information which indicates whether or not the mode is a FRUC mode. For example, in the case where the mode is a FRUC mode, the value of FRUC_flag is set to 1, while where the mode is not a FRUC mode, the value of FRUC_flag is set to 0.

FRUC_Mode_flag is flag information which indicates which of the template matching method and the bilateral matching method is employed to derive the motion information in the case where the mode is a FRUC mode. For example, in the case where the bilateral matching is employed to derive the motion information, the value of FRUC_Mode_flag is set to 1, while where the template matching is employed to derive the motion information, the value of FRUC_Mode_flag is set to 0.

The motion vector information is information including at least one of the candidates for the prediction motion vectors or the difference motion vectors mentioned above.

In the case where the mode information pred_mode_flag indicates the intra prediction process, the prediction information Pinfo includes intra prediction mode information indicating an intra prediction mode used for the intra prediction process, etc. Needless to say, the prediction information Pinfo may have any desired contents, and any information other than the aforementioned examples may be included in the prediction information Pinfo.

The transformation information Tinfo includes TBSize, which indicates the size of a processing unit (a transformation block) called a TB (Transform Block), etc. A TU (Transform Unit), which is a processing unit of an orthogonal transformation process, is made up of TBs for each of brightness (Y) and color differences (Cb and Cr), and, here, the TU is considered to be the same as the sub-block.

In addition, in the image encoding apparatus 11, pictures (hereinafter referred to also as original images) of a moving image which is to be encoded are supplied to each of the computation unit 22 and the predicting unit 30.

The computation unit 22 treats the inputted pictures one after another as a picture to be encoded, and, on the basis of the split flag in the prediction information Pinfo, sets blocks to be encoded, i.e., CUs or sub-blocks, for the picture to be encoded. The computation unit 22 subtracts a prediction image P on a block basis supplied from the predicting unit 30 from an image I (hereinafter referred to also as a current block) of a block to be encoded to obtain a prediction residual D, and supplies the prediction residual D to the transformation unit 23.

On the basis of the transformation information Tinfo supplied from the control unit 21, the transformation unit 23 subjects the prediction residual D supplied from the computation unit 22 to orthogonal transformation or the like to derive transform coefficients Coeff, and supplies the transform coefficients Coeff to the quantization unit 24.

On the basis of the transformation information Tinfo supplied from the control unit 21, the quantization unit 24 subjects the transform coefficients Coeff supplied from the transformation unit 23 to scaling (quantization) to derive quantized transform coefficient levels level. The quantization unit 24 supplies the quantized transform coefficient levels level to each of the encoding unit 25 and the inverse quantization unit 26.

The encoding unit 25 encodes the quantized transform coefficient levels level supplied from the quantization unit 24, etc., employing a predetermined method. For example, in accordance with the definition of a syntax table, the encoding unit 25 converts the coding parameters (the header information Hinfo, the prediction information Pinfo, the transformation information Tinfo, etc.) supplied from the control unit 21, and the quantized transform coefficient levels level supplied from the quantization unit 24, to syntax values of syntax elements. Then, the encoding unit 25 encodes each syntax value using arithmetic coding or the like.

The encoding unit 25, for example, multiplexes encoded data which are bit strings of the syntax elements obtained as a result of the encoding, and outputs the multiplexed data as an encoded stream.

On the basis of the transformation information Tinfo supplied from the control unit 21, the inverse quantization unit 26 subjects the values of the quantized transform coefficient levels level supplied from the quantization unit 24 to scaling (inverse quantization) to derive transform coefficients Coeff_IQ after the inverse quantization. The inverse quantization unit 26 supplies the transform coefficients Coeff_IQ to the inverse transformation unit 27. The inverse quantization performed by the inverse quantization unit 26 is the inverse of the quantization performed by the quantization unit 24, and is a process similar to inverse quantization performed in an image decoding apparatus, which will be described below.

On the basis of the transformation information Tinfo supplied from the control unit 21, the inverse transformation unit 27 subjects the transform coefficients Coeff_IQ supplied from the inverse quantization unit 26 to inverse orthogonal transformation or the like to derive a prediction residual D'. The inverse transformation unit 27 supplies the prediction residual D' to the computation unit 28.

The inverse orthogonal transformation performed by the inverse transformation unit 27 is the inverse of the orthogonal transformation performed by the transformation unit 23, and is a process similar to inverse orthogonal transformation performed in the image decoding apparatus, which will be described below.

The computation unit 28 adds the prediction residual D' supplied from the inverse transformation unit 27 to the prediction image P corresponding to the prediction residual D', the prediction image P being supplied from the predicting unit 30, to derive a local decoded image Rec. The computation unit 28 supplies the local decoded image Rec to the frame memory 29.

The frame memory 29 uses the local decoded image Rec supplied from the computation unit 28 to reconstruct a decoded image on a picture basis, and stores the reconstructed decoded image in a buffer within the frame memory 29.

The frame memory 29 reads, as a reference image (a reference picture), a decoded image specified by the predicting unit 30 from the buffer, and supplies the specified decoded image to the predicting unit 30. In addition, the frame memory 29 may be configured to store the header information Hinfo, the prediction information Pinfo, the transformation information Tinfo, etc., related to generation of the decoded image in the buffer within the frame memory 29.

On the basis of the mode information pred_mode_flag in the prediction information Pinfo, the predicting unit 30 acquires, as a reference image, a decoded image at the same time as that of the block to be encoded, the decoded image being stored in the frame memory 29. Then, using the reference image, the predicting unit 30 performs an intra prediction process on the block to be encoded in the intra prediction mode indicated by the intra prediction mode information.

In addition, on the basis of the mode information pred_mode_flag and the reference image identification information in the prediction information Pinfo, the predicting unit 30 acquires, as a reference image, a decoded image at a time different from that of the block to be encoded, the decoded image being stored in the frame memory 29. On the basis of Merge_flag, FRUC_flag, FRUC_Mode_flag, the motion vector information, and so on, the predicting unit 30 performs an inter prediction process on the reference image in a mode determined by Merge_flag and FRUC_flag. Note that an original image supplied may also be used as necessary when the inter prediction process is performed.

The predicting unit 30 supplies the prediction image P of the block to be encoded to each of the computation unit 22 and the computation unit 28, the prediction image P having been generated as a result of the intra prediction process or the inter prediction process.

Further, when deriving the motion information using a FRUC technique when performing the intra prediction process or the inter prediction process, the predicting unit 30 determines whether or not the bilateral matching method can be employed, and, if it is determined that the bilateral matching method cannot be employed, automatically employs the template matching method.

Specifically, as described above with reference to FIG. 1, each of the FRUC AMVP mode indicated by arrow A13, the FRUC MERGE mode indicated by arrow A14, and the SKIP FRUC mode indicated by arrow A17 is a mode in which the motion information is derived using the FRUC technique. In addition, in each of these modes, one of the bilateral matching method and the template matching method is chosen, but the bilateral matching method cannot be employed in the case where the image I, i.e., the current block, is a P-slice block.

For example, in the bilateral matching, a picture PIC11, which is a picture (a frame) to be encoded, and a picture PIC12 and a picture PIC13, each of which is a reference picture, are used as described below with reference to FIG. 3. Thus, the bilateral matching requires two reference frames at different times as objects to be searched for a match, and therefore, the bilateral matching method cannot be employed in the case where there is only one frame to be searched for a match.

Accordingly, the predicting unit 30 checks whether there is only one reference frame to be referred to for the picture to be encoded or whether there are two such reference frames (hereinafter referred to as a reference relationship of the picture to be encoded as appropriate) in accordance with POC (Picture Order Count) numbers, which indicate an order in which reference frames are outputted, and determines whether or not the bilateral matching method can be employed on the basis of the reference relationship.

For example, in the case where there is only the same POC number of the reference frame, the predicting unit 30 recognizes that there is only one reference frame with respect to the reference relationship of the picture to be encoded, and determines that the bilateral matching method cannot be employed. Accordingly, in this case, the template matching method is automatically adopted (chosen) as a method for deriving the motion information, and the predicting unit 30 derives the motion information with the template matching method, and generates the prediction image on the basis of the motion information.

Meanwhile, in the case where there are different POC numbers of the reference frames, the predicting unit 30 recognizes that there are two reference frames with respect to the reference relationship of the picture to be encoded, and determines that the bilateral matching method can be employed. Accordingly, in this case, the predicting unit 30 first calculates a cost calculated from the motion information derived with the bilateral matching method, and a cost calculated from the motion information derived with the template matching method, as described below with reference to a flowchart of FIG. 9. For example, a cost obtained about a difference calculation block is arranged to decrease as a difference about the difference calculation block decreases.

Then, if a cost of employing the bilateral matching method is less than a cost of employing the template matching method, the predicting unit 30 determines to employ the bilateral matching method, and generates the prediction image on the basis of the motion information derived with the bilateral matching method. Meanwhile, if the cost of employing the bilateral matching method is not less than the cost of employing the template matching method, the predicting unit 30 determines to employ the template matching method, and generates the prediction image on the basis of the motion information derived with the template matching method, even when the bilateral matching method can be employed.

As described above, in the image encoding apparatus 11, the predicting unit 30 is capable of determining whether or not the bilateral matching method can be employed on the basis of the reference relationship of the picture to be encoded. Thus, in the image encoding apparatus 11, the template matching method is automatically adopted as the method for deriving the motion information in the case where the bilateral matching method cannot be employed. Accordingly, the image encoding apparatus 11 is able to avoid, for example, transmission of a useless code, e.g., addition of information indicating use of the template matching method, and thus to achieve an additional improvement in coding efficiency.

### <FRUC Mode>

Here, the FRUC mode will be described.

In inter prediction, for example, the motion information, such as the prediction motion vector and a reference index, is required on the decoder side to perform a motion compensation.

Generally, the prediction motion vectors are included in an encoded stream in the form of information of the difference motion vectors in connection with the candidates for the prediction motion vectors, and the decoder reconstructs the prediction motion vectors on the basis of the information of the difference motion vectors and the candidates for the prediction motion vectors.

When the difference motion vectors are stored in the encoded stream, an increase in the amount of codes of the encoded stream occurs, resulting in a deterioration in the coding efficiency.

The FRUC technique is one method for estimating the motion information, i.e., deriving the motion information, and if the motion information is derived on the decoder side using the FRUC technique, not only the prediction motion vectors can be estimated with high precision, but also a reduction in the amount of codes of the motion information can be achieved, resulting in improved coding efficiency. In particular, in the SKIP FRUC mode, which does not require the motion information, a significant improvement in the coding efficiency can be achieved.

As described above, in the FRUC mode, one of the bilateral matching method and the template matching method can be chosen on the encoder side, while on the decoder side, the motion information will be derived with the method specified on the encoder side.

For example, in the bilateral matching, the prediction motion vectors of a current block CB11 on the picture PIC11 are derived using the picture PIC11, which is the picture (frame) to be encoded, and the picture PIC12 and the picture PIC13, each of which is a reference picture, as illustrated in FIG. 3.

Note that, in FIG. 3, the horizontal direction represents time, and in this example, the picture PIC12 is a frame earlier than the picture PIC11 in display time, while the picture PIC13 is a frame later than the picture PIC11 in the display time.

In particular, the picture PIC12 is a picture (a frame) indicated as a reference picture by a reference list Ref0 as reference image identification information. Meanwhile, the picture PIC13 is a picture (a frame) indicated as a reference picture by a reference list Ref1 as reference image identification information.

Here, the reference list Ref0 is a list that basically indicates frames earlier than the picture PIC11, which is to be encoded, as reference pictures, and in the reference list Ref0, a plurality of pictures including the picture to be encoded can be specified as the reference pictures.

Similarly, the reference list Ref1 is a list that basically indicates frames later than the picture PIC11, which is to be encoded, as reference pictures, and in the reference list Ref1, a plurality of pictures including the picture to be encoded can be specified as the reference pictures.

In addition, in the example illustrated in FIG. 3, TD0 represents a temporal distance between the picture PIC11 and the picture PIC12, while TD1 represents a temporal distance between the picture PIC11 and the picture PIC13. Here, it is assumed, for example, that the temporal distance TD0 and the temporal distance TD1 are equal to each other.

For example, when the prediction motion vectors of the current block CB11, which is to be encoded, are derived, a straight line L11 passing through a center of the current block CB11 is defined, and a block BL11, which has a point of intersection of the straight line L11 with the picture PIC12 as a center, in the picture PIC12 and a block BL12, which has a point of intersection of the straight line L11 with the picture PIC13 as a center, in the picture PIC13 are selected. Then, differences between the block BL11 and the block BL12 are calculated.

Further, while the positions of the block BL11 and the block BL12 are shifted within a search range, the above differences are calculated with respect to all combinations of the block BL11 and the block BL12 to search for the combination that provides the smallest differences. Then, vectors representing the blocks of the combination that provides the smallest differences are determined to be the prediction motion vectors to be obtained.

Note that, at this time, the blocks are selected such that the straight line connecting the center of the block BL11 and the center of the block BL12 never fails to pass through the center of the current block CB11. That is, the differences are calculated with respect to the block BL11 and the block BL12 which are connected straight through the current block CB11.

In this example, a motion vector MV0 and a motion vector MV1, each of which is represented by an arrow in the figure, are obtained as the prediction motion vectors of the current block CB11.

The motion vector MV0 is a vector starting at a position on the picture PIC12 which has the same positional relationship as that of a central position of the current block CB11 and ending at the position of the center of the block BL11. Similarly, the motion vector MV1 is a vector starting at a position on the picture PIC13 which has the same positional relationship as that of the central position of the current block CB11 and ending at the position of the center of the block BL12.

Thus, the bilateral matching assumes a model in which texture moves in a straight manner between the picture PIC12 and the picture PIC13, and an object that moves (travels) at a uniform velocity fits this model.

FIG. 4 is a diagram representing each of the pictures in a one-dimensional manner to make it easier to understand that, in the bilateral matching, the blocks on the two reference pictures are connected straight with the current block. Note that, in FIG. 4, parts that have corresponding parts in FIG. 3 are assigned the same reference symbols as in FIG. 3, and descriptions thereof are omitted as appropriate.

In this example, the current block CB11, a block BL21 on the picture PIC12, and a block BL22 on the picture PIC13 are connected in a straight manner. In other words, the current block CB11, the block BL21, and the block BL22 lie on a straight line L21, and the differences between the block BL21 and the block BL22 are calculated to derive the prediction motion vectors.

Note that, at a time when the current block CB11 has become an object to be encoded or decoded, each of the picture PIC12 and the picture PIC13, each of which is a reference picture, has already been encoded or decoded in its entirety.

In contrast, at the time when the current block CB11 has become the object to be encoded or decoded, the picture PIC11 has been encoded or decoded only partly, with a region above the current block CB11 in the figure having been encoded or decoded, and a region below the current block CB11 in the figure remaining to be encoded or decoded.

When the prediction motion vectors of the current block CB11 are derived, the angle (inclination) of the straight line L21 is changed to change the blocks with respect to which the differences are to be calculated.

As described above, in the bilateral matching, the prediction motion vectors are derived with a block matching that involves using two reference pictures that are different from each other in the display time and which are each different from the picture to be encoded in the display time, and changing the blocks with respect to which the differences are to be calculated. Thus, not only on the encoder side but also on the decoder side, the prediction motion vectors can be derived (estimated) with high precision.

Meanwhile, in template matching, a block matching is performed between the picture to be encoded and a reference picture that is different from the picture to be encoded in the display time, as illustrated in FIG. 5, for example. Note that, in FIG. 5, parts that have corresponding parts in FIG. 3 are assigned the same reference symbols as in FIG. 3, and descriptions thereof are omitted as appropriate.

In the example illustrated in FIG. 5, the current block CB11 in the picture PIC11 is an object to be encoded, and the block matching is performed between the picture PIC11 and the picture PIC12.

In the block matching, a region TM11-1 and a region TM11-2, each of which is adjacent to the current block CB11 on the picture PIC11, are determined to be templates, which are regions used for the block matching, i.e., for difference calculation. Note that, hereinafter, the region TM11-1 and the region TM11-2 will be referred to simply as regions TM11 unless they need to be distinguished from each other.

Each of the regions TM11 is a region that has already been encoded or decoded at the time when the current block CB11 has become an object to be processed.

Meanwhile, in the picture PIC12, which is a reference picture, a region TM12-1 and a region TM12-2, which have the same size and shape as the region TM11-1 and the region TM11-2, are determined to be templates.

The shape and size of the region TM12-1 are the same as the shape and size of the region TM11-1, while the shape and size of the region TM12-2 are the same as the shape and size of the region TM11-2. Further, the relative positional relationships of the region TM12-1 and the region TM12-2 are the same as the relative positional relationships of the region TM11-1 and the region TM11-2.

Hereinafter, the region TM12-1 and the region TM12-2 will be referred to simply as regions TM12 unless they need to be distinguished from each other.

In the template matching, while the positions of the regions TM12 are shifted within a predetermined search range, differences between the regions TM11 and the regions TM12, which have the same shapes, are calculated with respect to all the positions to search for the positions of the regions TM12 that provide the smallest differences.

In this example, when the above differences are calculated, differences between the region TM11-1 and the region TM12-1, and differences between the region TM11-2 and the region TM12-2, are calculated.

Then, a vector representing the positions of the regions TM12 that provide the smallest differences is determined to be the prediction motion vector to be obtained. In this example, a motion vector MV0 represented by an arrow in the figure is obtained as the prediction motion vector of the current block CB11.

Suppose, for example, that a block that has the same shape and size as the current block CB11, and which has the same positional relationship relative to the regions TM12 in the picture PIC12 as the positional relationship of the current block CB11 relative to the regions TM11 is a block BL31. In addition, suppose that the differences between the regions TM11 and the regions TM12 are the smallest when the regions TM12 and the block BL31 are at the positions illustrated in FIG. 5.

In this case, a vector starting at a position on the picture PIC12 which has the same positional relationship as that of the central position of the current block CB11 and ending at the position of a center of the block BL31 is determined to be the motion vector MV0.

FIG. 6 is a diagram representing each of the pictures in a one-dimensional manner to make it easier to understand the relationships between the templates in the reference picture and the templates adjacent to the current block in the template matching. Note that, in FIG. 6, parts that have corresponding parts in FIG. 3 or FIG. 5 are assigned the same reference symbols as in FIG. 3 or FIG. 5, and descriptions thereof are omitted as appropriate.

In this example, the region TM11 of the template adjacent to the current block CB11 and the region TM12 of the template on the picture PIC12, which is a reference picture, are depicted as being connected by a straight line, and the differences between the region TM11 and the region TM12 are calculated to derive the prediction motion vector.

Note that, at the time when the current block CB11 has become an object to be encoded or decoded, each of the picture PIC12 and the picture PIC13, each of which is a reference picture, has already been encoded or decoded in its entirety.

In contrast, at the time when the current block CB11 has become the object to be encoded or decoded, the picture PIC11 has been encoded or decoded only partly, with a region above the current block CB11 in the figure having been encoded or decoded, and a region below the current block CB11 in the figure remaining to be encoded or decoded. In this example, the region TM11 is a region that has already been encoded or decoded.

In the template matching, it is assumed that the motion vector is the same for the current block CB11 and the region TM11, which is a template adjacent to the current block CB11. Then, the picture PIC12 is searched for a region that is similar to the region TM11, i.e., for the region TM12 that provides small differences, and a motion vector given by the searching result is determined to be the prediction motion vector of the current block CB11.

As described above, in the template matching, the prediction motion vector is derived with a block matching that involves using one reference picture that is different from the picture to be encoded in the display time, and changing the position of a template on the reference picture with respect to which the differences are to be calculated. Thus, not only on the encoder side but also on the decoder side, the prediction motion vector can be derived (estimated) with high precision.

### <Description of Image Encoding Process>

Next, an operation of the image encoding apparatus 11, which has been described above, will now be described below.

First, with reference to a flowchart of FIG. 7, an image encoding process performed by the image encoding apparatus 11 will now be described below. Note that this image encoding process is performed on a CU or sub-block basis.

At step S11, the control unit 21 sets the coding parameters on the basis of the input from the outside or the like, and supplies the set coding parameters to various parts of the image encoding apparatus 11.

At step S11, the header information Hinfo, the prediction information Pinfo, the transformation information Tinfo, etc., for example, are set as the coding parameters, as described above.

At step S12, the predicting unit 30 determines whether or not the inter prediction process is to be performed on the basis of the mode information pred_mode_flag in the prediction information Pinfo supplied from the control unit 21. In the case where the value of the mode information pred_mode_flag indicates the inter prediction process, for example, it is determined at step S12 that the inter prediction process is to be performed.

If it is determined at step S12 that the inter prediction process is to be performed, the predicting unit 30 determines at step S13 whether or not the value of Merge_flag in the prediction information Pinfo supplied from the control unit 21 is 1, that is, whether or not Merge_flag = 1.

If it is determined at step S13 that Merge_flag = 1, i.e., that the mode is a MERGE mode, the predicting unit 30 determines at step S14 whether or not the value of FRUC_flag in the prediction information Pinfo supplied from the control unit 21 is 1, that is, whether or not FRUC_flag = 1.

If it is determined at step S14 that FRUC_flag = 1, i.e., that the mode is a FRUC mode, the process proceeds to step S15.

At step S15, various parts of the image encoding apparatus 11 together perform an encoding process of encoding the image I (the current block) to be encoded in the FRUC MERGE mode, and the image encoding process is ended.

In the encoding process in the FRUC MERGE mode, the motion information is derived in the FRUC mode, and an encoded stream having stored therein the prediction information Pinfo, the quantized transform coefficient levels level, and so on is generated.

The prediction information Pinfo generated at this time includes, for example, Merge_flag, FRUC_flag, FRUC_Mode_flag, and the reference image identification information, and does not include the motion vector information. In addition, when the image I, i.e., the current block, is a P-slice block, FRUC_Mode_flag is not included in the prediction information Pinfo.

Further, although an explanation is omitted here, in the case of the SKIP FRUC mode, a process similar to the encoding process in the FRUC MERGE mode performed at step S15 is performed, and an encoded stream is generated and outputted. Note, however, that the quantized transform coefficient levels level are not stored in the encoded stream in the case of the SKIP FRUC mode.

Meanwhile, if it is determined at step S14 that FRUC_flag ≠ 1, i.e., that FRUC_flag = 0, meaning that the mode is not a FRUC mode, the process proceeds to step S16.

At step S16, various parts of the image encoding apparatus 11 together perform an encoding process of encoding the image I to be encoded in the AMVP MERGE mode, and the image encoding process is ended.

In the encoding process in the AMVP MERGE mode, the inter prediction process is performed by the predicting unit 30 with a motion compensation being performed in the AMVP mode. Then, the current block is encoded using the prediction image P obtained by the inter prediction process, and an encoded stream having stored therein the prediction information Pinfo, the quantized transform coefficient levels level, and so on is generated.

If it is determined at step S13 that Merge_flag ≠ 1, i.e., that Merge_flag = 0, meaning that the mode is a Non-MERGE mode, the process proceeds to step S17.

At step S17, the predicting unit 30 determines whether or not the value of FRUC_flag in the prediction information Pinfo supplied from the control unit 21 is 1, that is, whether or not FRUC_flag = 1.

If it is determined at step S17 that FRUC_flag = 1, i.e., that the mode is a FRUC mode, the process proceeds to step S18.

At step S18, various parts of the image encoding apparatus 11 together perform an encoding process of encoding the image I to be encoded in the FRUC AMVP mode, and the image encoding process is ended.

In the encoding process in the FRUC AMVP mode, a process similar to the encoding process in the FRUC MERGE mode is performed, and an encoded stream is generated. In this case, the motion information is derived in the FRUC mode, and an encoded stream having stored therein the prediction information Pinfo, the quantized transform coefficient levels level, and so on is generated.

In addition, Merge_flag, FRUC_flag, FRUC_Mode_flag, the difference motion vector as the motion vector information, and the reference image identification information, for example, are included in the prediction information Pinfo. Note, however, that FRUC_Mode_flag is not included in the prediction information Pinfo when the current block is a P-slice block.

In contrast, if it is determined at step S17 that FRUC_flag ≠ 1, i.e., that FRUC_flag = 0, meaning that the mode is not a FRUC mode, the process proceeds to step S19.

At step S19, various parts of the image encoding apparatus 11 together perform an encoding process of encoding the image I to be encoded in the AMVP mode, and the image encoding process is ended.

In the encoding process in the AMVP mode, the inter prediction process is performed by the predicting unit 30 with a motion compensation being performed in the AMVP mode. Then, the current block is encoded using the prediction image P obtained by the inter prediction process, and an encoded stream having stored therein the prediction information Pinfo, the quantized transform coefficient levels level, the motion vector information, and so on is generated.

If it is determined at step S12 that the inter prediction process is not to be performed, i.e., that the intra prediction process is to be performed, the process proceeds to step S20.

At step S20, various parts of the image encoding apparatus 11 together perform an intra coding process of encoding the image I to be encoded in the intra prediction mode, and the image encoding process is ended.

In the intra coding process, the prediction image P is generated by the predicting unit 30 in the intra prediction mode. Then, the current block is encoded using the prediction image P, and an encoded stream having stored therein the prediction information Pinfo, the quantized transform coefficient levels level, and so on is generated.

In the above-described manner, the image encoding apparatus 11 encodes the inputted image in accordance with the coding parameters, and outputs the encoded stream obtained by the encoding. Encoding the image in an appropriate mode as described above leads to an improvement in the coding efficiency.

### <Description of Inter Prediction Mode Setting Process>

Next, an inter prediction mode setting process, which corresponds to the process of step S11 in FIG. 7, will now be described below with reference to a flowchart of FIG. 8.

This inter prediction mode setting process is a process concerning the inter prediction mode in the process of step S11 in FIG. 7. More specifically, the inter prediction mode setting process is a process therein by which the values of Merge_flag and FRUC_flag are determined. In addition, the inter prediction mode setting process is performed on a CU or sub-block basis.

At step S51, the control unit 21 controls various parts of the image encoding apparatus 11 to perform an encoding process in the FRUC MERGE mode with respect to the block to be encoded, and to calculate an RD cost J_{FRUC_MRG}.

Note that the RD cost is calculated on the basis of the number of generated bits (the amount of codes) obtained as a result of the encoding, the SSE (Error Sum of Squares) of a decoded image, etc.

At step S52, the control unit 21 controls various parts of the image encoding apparatus 11 to perform an encoding process in the AMVP MERGE mode with respect to the block to be encoded, and to calculate an RD cost J_{MRG}.

At step S53, the control unit 21 controls various parts of the image encoding apparatus 11 to perform an encoding process in the FRUC AMVP mode with respect to the block to be encoded, and to calculate an RD cost J_{FRUC_AMVP}.

At step S54, the control unit 21 controls various parts of the image encoding apparatus 11 to perform an encoding process in the AMVP mode with respect to the block to be encoded, and to calculate an RD cost J_{AMVP}.

At step S55, the control unit 21 determines whether or not the RD cost J_{FRUC_MRG} is the smallest of the RD cost J_{FRUC_MRG}, the RD cost J_{MRG}, the RD cost J_{FRUC_AMVP}, and the RD cost J_{AMVP} obtained by the processes of steps S51 to S54.

If it is determined at step S55 that the RD cost J_{FRUC_MRG} is the smallest, the process proceeds to step S56. In this case, the FRUC MERGE mode is selected as the inter prediction mode for the current block, and, in the image encoding process described above with reference to FIG. 7, the encoding process of step S15 will be performed to generate the encoded stream.

At step S56, the control unit 21 sets Merge_flag = 1 and FRUC_flag = 1. That is, the control unit 21 sets each of the value of Merge_flag and the value of FRUC_flag as the prediction information Pinfo to 1.

At step S57, the control unit 21 generates FRUC_Mode_flag on the basis of a result of deriving the motion information in the FRUC mode, and the inter prediction mode setting process is ended. Note, however, that when the current block is a P-slice block, the process of step S57 is not performed, and FRUC_Mode_flag is not generated.

For example, when encoding is performed in the FRUC mode, the value of FRUC_Mode_flag is set to 1 in the case where an RD cost J_{BiLateral}, which is obtained when the bilateral matching method is adopted to derive the motion information, is less than an RD cost J_{Template}, which is obtained when the template matching method is adopted to derive the motion information. That is, at step S57, FRUC_Mode_flag with a value of 1 is generated. In contrast, in the case where the RD cost J_{BiLateral} is equal to or greater than the RD cost J_{Template}, the value of FRUC_Mode_flag is set to 0.

Meanwhile, if it is determined at step S55 that the RD cost J_{FRUC_MRG} is not the smallest, the process proceeds to step S58. At step S58, the control unit 21 determines whether or not the RD cost J_{MRG} is the smallest of the RD cost J_{FRUC_MRG}, the RD cost J_{MRG}, the RD cost J_{FRUC_AMVP}, and the RD cost J_{AMVP}.

If it is determined at step S58 that the RD cost J_{MRG} is the smallest, the process proceeds to step S59. In this case, the AMVP MERGE mode is selected as the inter prediction mode for the current block, and, in the image encoding process described above with reference to FIG. 7, the encoding process of step S16 will be performed to generate the encoded stream.

At step S59, the control unit 21 sets Merge_flag = 1 and FRUC_flag = 0, and the inter prediction mode setting process is ended.

Further, if it is determined at step S58 that the RD cost J_{MRG} is not the smallest, the process proceeds to step S60.

At step S60, the control unit 21 determines whether or not the RD cost J_{FRUC_AMVP} is the smallest of the RD cost J_{FRUC}__{MRG}, the RD cost J_{MRG}, the RD cost J_{FRUC_AMVP}, and the RD COST J_{AMVP}.

If it is determined at step S60 that the RD cost J_{FRUC_AMVP} is the smallest, the control unit 21 sets Merge_flag = 0 and FRUC_flag = 1 at step S61.

In this case, the FRUC AMVP mode is selected as the inter prediction mode for the current block, and, in the image encoding process described above with reference to FIG. 7, the encoding process of step S18 will be performed to generate the encoded stream.

At step S62, the control unit 21 generates FRUC_Mode_flag on the basis of the result of deriving the motion information in the FRUC mode, and the inter prediction mode setting process is ended. Note, however, that when the current block is a P-slice block, the process of step S62 is not performed, and FRUC_Mode_flag is not generated.

Note that, at step S62, a process similar to that of step S57 is performed.

Meanwhile, if it is determined at step S60 that the RD cost J_{FRUC_AMVP} is not the smallest, that is, that the RD cost J_{AMVP} is the smallest, the process proceeds to step S63. In this case, the AMVP mode is selected as the inter prediction mode for the current block, and, in the image encoding process described above with reference to FIG. 7, the encoding process of step S19 will be performed to generate the encoded stream.

At step S63, the control unit 21 sets Merge_flag = 0 and FRUC_flag = 0, and the inter prediction mode setting process is ended.

As described above, the image encoding apparatus 11 calculates the RD cost of each mode, selects the mode of which the RD cost is the smallest, and generates Merge_flag and FRUC_flag in accordance with the selection. An improvement in the coding efficiency can thus be achieved.

### <Description of FRUC MERGE Mode Encoding Process>

Next, a FRUC MERGE mode encoding process performed by the image encoding apparatus 11 will now be described below with reference to the flowchart of FIG. 9. Note that this FRUC MERGE mode encoding process is performed on a CU or sub-block basis.

At step S91, the predicting unit 30 determines whether or not the current block to be processed, i.e., a CU or sub-block which is the image I to be encoded, is a P-slice block on the basis of the prediction information Pinfo supplied from the control unit 21 or the like.

If it is determined at step S91 that the current block is a P-slice block, the process proceeds to step S92. In the case where the current block is a P-slice block, the template matching is automatically adopted (chosen) as the method for deriving the motion information, since the bilateral matching cannot be performed when deriving the motion information because there is only one reference picture for a P-slice.

At step S92, the predicting unit 30 derives the motion information of the current block with the template matching method. For example, the predicting unit 30 reads, from the frame memory 29, the picture (frame) to be encoded and the reference picture indicated by the reference image identification information on the basis of the prediction information Pinfo supplied from the control unit 21 or the like, and uses these pictures to derive the motion information of the current block with the template matching method.

After the motion information is derived by the process of step S92, the process proceeds to step S99.

Meanwhile, if it is determined at step S91 that the current block is not a P-slice block, the process proceeds to step S93.

At step S93, the predicting unit 30 checks the reference relationship of the picture to be encoded.

At step S94, the predicting unit 30 determines whether or not the bilateral matching method can be employed from the reference relationship, on the basis of a result of checking the reference relationship of the picture to be encoded at step S93. For example, the predicting unit 30 determines that the bilateral matching method cannot be employed in the case where there is only the same POC number of the reference frame, and determines that the bilateral matching method can be employed in the case where there are different POC numbers of the reference frames.

If it is determined at step S94 that the bilateral matching method cannot be employed, the process proceeds to step S92, and the predicting unit 30 derives the motion information of the current block with the template matching method as described above.

Meanwhile, if it is determined at step S94 that the bilateral matching method can be employed, the process proceeds to step S95.

At step S95, the predicting unit 30 derives the motion information of the current block with the template matching method, and calculates the RD cost J_{Template}, which is obtained when the template matching method is adopted.

For example, the predicting unit 30 reads, from the frame memory 29, the picture (frame) to be encoded and the reference picture indicated by the reference image identification information on the basis of the prediction information Pinfo supplied from the control unit 21 or the like. In addition, the predicting unit 30 derives the motion information of the current block with the template matching method using the read pictures, and also calculates the RD cost J_{Template}.

At step S96, the predicting unit 30 derives the motion information of the current block with the bilateral matching method, and calculates the RD cost J_{BiLateral}, which is obtained when the bilateral matching method is adopted.

For example, the predicting unit 30 reads, from the frame memory 29, two reference pictures indicated by the reference image identification information in the prediction information Pinfo supplied from the control unit 21. In addition, the predicting unit 30 derives the motion information of the current block with the bilateral matching method using the read reference pictures, and also calculates the RD cost J_{BiLateral}.

At step S97, the predicting unit 30 determines whether or not the RD cost J_{BiLateral} is less than the RD COSt J_{Template}.

If it is determined at step S97 that the RD cost J_{BiLateral} is less than the RD cost J_{Template}, the predicting unit 30 generates the prediction image on the basis of the motion information derived with the bilateral matching method, and supplies the generated prediction image to each of the computation unit 22 and the computation unit 28 at step S98.

For example, the predicting unit 30 determines an image generated with a motion compensation using each of the blocks indicated by the motion information (the prediction motion vectors) in the two reference pictures to be the prediction image P.

After the prediction image is generated, the process proceeds to step S100.

Meanwhile, if it is determined at step S97 that the RD cost J_{BiLateral} is not less than the RD cost J_{Template}, or after the process of step S92 is performed, a process of step S99 is performed.

Specifically, at step S99, the predicting unit 30 generates the prediction image on the basis of the motion information derived with the template matching method, and supplies the generated prediction image to each of the computation unit 22 and the computation unit 28. For example, the predicting unit 30 determines an image of a block indicated by the motion information (the prediction motion vector) in the reference picture to be the prediction image P.

After the prediction image is generated, the process proceeds to step S100.

After the prediction image P is generated by the process of step S98 or step S99, a process of step S100 is performed.

At step S100, the computation unit 22 computes, as the prediction residual D, differences between the supplied image I and the prediction image P supplied from the predicting unit 30, and supplies the prediction residual D to the transformation unit 23.

At step S101, the transformation unit 23 subjects the prediction residual D supplied from the computation unit 22 to the orthogonal transformation or the like on the basis of the transformation information Tinfo supplied from the control unit 21, and supplies the resulting transform coefficients Coeff to the quantization unit 24.

At step S102, on the basis of the transformation information Tinfo supplied from the control unit 21, the quantization unit 24 subjects the transform coefficients Coeff supplied from the transformation unit 23 to scaling (quantization) to derive the quantized transform coefficient levels level. The quantization unit 24 supplies the quantized transform coefficient levels level to each of the encoding unit 25 and the inverse quantization unit 26.

At step S103, on the basis of the transformation information Tinfo supplied from the control unit 21, the inverse quantization unit 26 subjects the quantized transform coefficient levels level supplied from the quantization unit 24 to inverse quantization with properties corresponding to properties of the quantization at step S102. The inverse quantization unit 26 supplies the transform coefficients Coeff_IQ obtained by the inverse quantization to the inverse transformation unit 27.

At step S104, on the basis of the transformation information Tinfo supplied from the control unit 21, the inverse transformation unit 27 subjects the transform coefficients Coeff_IQ supplied from the inverse quantization unit 26 to inverse orthogonal transformation or the like employing a method matching the orthogonal transformation or the like at step S101 to derive the prediction residual D'. The inverse transformation unit 27 supplies the obtained prediction residual D' to the computation unit 28.

At step S105, the computation unit 28 adds the prediction residual D' supplied from the inverse transformation unit 27 to the prediction image P supplied from the predicting unit 30 to generate a local decoded image Rec, and supplies the local decoded image Rec to the frame memory 29.

At step S106, the frame memory 29 uses the local decoded image Rec supplied from the computation unit 28 to reconstruct a decoded image on a picture basis, and holds the reconstructed decoded image in the buffer within the frame memory 29.

At step S107, the encoding unit 25 encodes the coding parameters set by the process of step S11 in FIG. 7 and supplied from the control unit 21, and the quantized transform coefficient levels level supplied from the quantization unit 24 by the process of step S102, employing the predetermined method.

The encoding unit 25 multiplexes the encoded data obtained by the encoding into an encoded stream (a bit stream), and outputs the encoded stream to an outside of the image encoding apparatus 11, so that the FRUC MERGE mode encoding process is ended.

In this case, data obtained by encoding Merge_flag, FRUC_flag, FRUC_Mode_flag, the reference image identification information, etc., and data obtained by encoding the quantized transform coefficient levels level, etc., for example, are stored in the encoded stream. The encoded stream thus obtained is transferred to the decoding side via a transmission line or a recording medium, for example.

Note that the FRUC MERGE mode encoding process described above basically corresponds to the process of step S15 in FIG. 7. However, in more detail, at the time of step S15, it has already been determined which of the template matching and the bilateral matching is to be performed. Therefore, the motion information is derived in accordance with the method indicated by the prediction information Pinfo, and the prediction image P is generated at step S98 or step S99 on the basis of the obtained motion information.

In addition, the processes of steps S91 to S97 in FIG. 9 correspond to the process of step S11 in FIG. 7, and, in particular, correspond to the process of step S51 in FIG. 8 within the process of step S11.

That is, if an instruction to calculate the RD cost J_{FRUC_MRG} is issued from the control unit 21 to the predicting unit 30 at step S51 in FIG. 8, the processes of steps S91 to S97 are performed. Then, the predicting unit 30 outputs, as the RD cost J_{FRUC_MRG}, the smaller one of the RD cost J_{Template} and the RD cost J_{BiLateral} to the control unit 21, for example. Note that, when the current block is a P-slice block, the RD cost J_{BiLateral} is not calculated, and the RD cost J_{Template} is outputted as the RD COST J_{FRUC_MRG}.

Further, also at step S18 in FIG. 7, as at step S15 in FIG. 7, a process similar to the FRUC MERGE mode encoding process described above with reference to FIG. 9 is performed. Specifically, step S15 and step S18 are different in the coding parameters encoded at step S107 in FIG. 9.

In the above-described manner, the image encoding apparatus 11 derives the motion information using the FRUC mode, and encodes the block to be encoded. A reduction in the motion vector information (the motion information) stored in the encoded stream can be achieved, and an improvement in the coding efficiency can be achieved, by thus using the FRUC mode to allow the motion information to be derived on the decoding side.

In addition, the image encoding apparatus 11 is capable of determining whether or not the bilateral matching method can be employed from the reference relationship of the picture to be encoded, and, when the bilateral matching method cannot be employed, automatically adopting the template matching method as the method for deriving the motion information. Thus, the aforementioned transmission of a useless code can be avoided to achieve an additional improvement in the coding efficiency.

### <Description of Image Decoding Apparatus>

Next, an image decoding apparatus as an image processing apparatus to which the present technology has been applied, which decodes the encoded stream outputted from the image encoding apparatus 11 illustrated in FIG. 2, will now be described below.

FIG. 10 is a diagram illustrating an exemplary configuration of one embodiment of an image decoding apparatus to which the present technology has been applied.

An image decoding apparatus 201 illustrated in FIG. 10 decodes the encoded stream generated by the image encoding apparatus 11 by a decoding method corresponding to an encoding method employed in the image encoding apparatus 11. For example, the image decoding apparatus 201 implements the technology proposed in HEVC or the technology proposed by JVET.

Note that major ones, and not necessarily all, of processing sections, data flows, and so on are illustrated in FIG. 10. In other words, in the image decoding apparatus 201, a processing section which is not illustrated as a block in FIG. 10 may exist, or a process or data flow which is not indicated by an arrow or the like in FIG. 10 may occur.

The image decoding apparatus 201 includes a decoding unit 211, an inverse quantization unit 212, an inverse transformation unit 213, a computation unit 214, a frame memory 215, and a predicting unit 216.

The image decoding apparatus 201 decodes the inputted encoded stream on a CU or sub-block basis.

The decoding unit 211 decodes the supplied encoded stream by a predetermined decoding method corresponding to the encoding method employed in the encoding unit 25. For example, the decoding unit 211 decodes the bit strings of the encoded stream in accordance with the definition of a syntax table, and obtains the coding parameters, such as the header information Hinfo, the prediction information Pinfo, and the transformation information Tinfo, and the quantized transform coefficient levels level.

For example, the decoding unit 211 divides the CUs on the basis of the split flag included in the coding parameters, and sets the CUs and the sub-blocks corresponding to the respective quantized transform coefficient levels level one after another as a block to be decoded.

In addition, the decoding unit 211 supplies the coding parameters obtained by the decoding to relevant blocks of the image decoding apparatus 201. For example, the decoding unit 211 supplies the prediction information Pinfo to the predicting unit 216, supplies the transformation information Tinfo to each of the inverse quantization unit 212 and the inverse transformation unit 213, and supplies the header information Hinfo to each of the blocks. In addition, the decoding unit 211 supplies the quantized transform coefficient levels level to the inverse quantization unit 212.

On the basis of the transformation information Tinfo supplied from the decoding unit 211, the inverse quantization unit 212 subjects the values of the quantized transform coefficient levels level supplied from the decoding unit 211 to scaling (inverse quantization) to derive the transform coefficients Coeff_IQ. This inverse quantization is the inverse of the quantization performed by the quantization unit 24 of the image encoding apparatus 11. Note that the inverse quantization unit 26 performs inverse quantization similar to that of the inverse quantization unit 212. The inverse quantization unit 212 supplies the obtained transform coefficients Coeff_IQ to the inverse transformation unit 213.

On the basis of the transformation information Tinfo supplied from the decoding unit 211, etc., the inverse transformation unit 213 subjects the transform coefficients Coeff_IQ supplied from the inverse quantization unit 212 to inverse orthogonal transformation or the like, and supplies the prediction residual D' obtained as a result to the computation unit 214.

The inverse orthogonal transformation performed in the inverse transformation unit 213 is the inverse of the orthogonal transformation performed by the transformation unit 23 of the image encoding apparatus 11. Note that the inverse transformation unit 27 performs inverse orthogonal transformation similar to that of the inverse transformation unit 213.

The computation unit 214 adds the prediction residual D' supplied from the inverse transformation unit 213 to the prediction image P corresponding to the prediction residual D' to derive a local decoded image Rec.

The computation unit 214 uses the obtained local decoded image Rec to reconstruct a decoded image on a picture basis, and outputs the obtained decoded image to an outside. In addition, the computation unit 214 also supplies the local decoded image Rec to the frame memory 215.

The frame memory 215 uses the local decoded image Rec supplied from the computation unit 214 to reconstruct a decoded image on a picture basis, and stores the reconstructed decoded image in a buffer within the frame memory 215.

In addition, the frame memory 215 reads, as a reference image (a reference picture), a decoded image specified by the predicting unit 216 from the buffer, and supplies the specified decoded image to the predicting unit 216. Further, the frame memory 215 may be configured to store the header information Hinfo, the prediction information Pinfo, the transformation information Tinfo, etc., related to generation of the decoded image in the buffer within the frame memory 215.

On the basis of the mode information pred_mode_flag in the prediction information Pinfo, the predicting unit 216 acquires, as a reference image, a decoded image at the same time as that of the block to be decoded, the decoded image being stored in the frame memory 215. Then, using the reference image, the predicting unit 216 performs an intra prediction process on the block to be decoded in the intra prediction mode indicated by the intra prediction mode information.

In addition, on the basis of the mode information pred_mode_flag and the reference image identification information in the prediction information Pinfo, the predicting unit 216 acquires the decoded image at the same time as that of the block to be decoded, and acquires, as a reference image, a decoded image at a time different from that of the block to be decoded, the decoded images being stored in the frame memory 215.

Similar to the predicting unit 30 of the image encoding apparatus 11, the predicting unit 216 performs an inter prediction process in a mode determined by Merge_flag and FRUC_flag using the images acquired from the frame memory 215 on the basis of Merge_flag, FRUC_flag, FRUC_Mode_flag, the motion vector information, and so on.

The predicting unit 216 supplies a prediction image P of the block to be decoded to the computation unit 214, the prediction image P having been generated as a result of the intra prediction process or the inter prediction process.

Further, similar to the predicting unit 30, the predicting unit 216 determines whether or not the bilateral matching method can be employed on the basis of the reference relationship of the picture to be encoded, and, if it is determined that the bilateral matching method cannot be employed, automatically determines to employ the template matching method.

For example, in the case where there is only the same POC number of the reference frame, the predicting unit 216 recognizes that there is only one reference frame regarding the reference relationship of the picture to be encoded, and determines that the bilateral matching method cannot be employed. Accordingly, in this case, the template matching method is automatically adopted (chosen) as the method for deriving the motion information, and the predicting unit 216 derives the motion information with the template matching method, and generates the prediction image on the basis of the motion information.

Meanwhile, in the case where there are different POC numbers of the reference frames, the predicting unit 216 recognizes that there are two reference frames regarding the reference relationship of the picture to be encoded, and determines that the bilateral matching method can be employed. In this case, the predicting unit 216 reads, from the bit stream, FRUC_MERGE_MODE_FLAG1, which is transmitted from the image encoding apparatus 11.

### <Description of Image Decoding Process>

Next, an operation of the image decoding apparatus 201 will now be described below.

First, with reference to a flowchart of FIG. 11, an image decoding process performed by the image decoding apparatus 201 will now be described below.

At step S211, the decoding unit 211 decodes the encoded stream supplied to the image decoding apparatus 201 to obtain the coding parameters and the quantized transform coefficient levels level.

The decoding unit 211 supplies the coding parameters to various parts of the image decoding apparatus 201, and supplies the quantized transform coefficient levels level to the inverse quantization unit 212.

At step S212, the decoding unit 211 divides the CTU on the basis of the split flag included in the coding parameters, and sets the blocks, i.e., the CUs or sub-blocks, corresponding to the respective quantized transform coefficient levels level as blocks to be decoded. Note that subsequent processes of steps S213 to S221 are performed individually for each of the blocks to be decoded.

Once the block to be decoded is determined, the predicting unit 216 thereafter performs the processes of steps S213 to S215 to determine the mode of the decoding on the basis of the prediction information Pinfo outputted from the decoding unit 211. These processes of steps S213 to S215 are similar to the processes of steps S12 to S14 in FIG. 7 except in that the processes are performed by the predicting unit 216 instead of the predicting unit 30, and therefore, descriptions thereof are omitted.

If it is determined at step S215 that FRUC_flag = 1, i.e., the mode is a FRUC mode, the process proceeds to step S216.

At step S216, various parts of the image decoding apparatus 201 together perform a decoding process of decoding the image of the block (the current block) to be decoded in the FRUC MERGE mode, and the image decoding process is ended.

In the decoding process in the FRUC MERGE mode, the motion information is derived in the FRUC mode, and the image of the block to be decoded is generated using a prediction image P generated by performing an inter prediction process using the obtained motion information.

In contrast, if it is determined at step S215 that FRUC_flag ≠ 1, i.e., that FRUC_flag = 0, meaning that the mode is not a FRUC mode, the process proceeds to step S217.

At step S217, various parts of the image decoding apparatus 201 together perform a decoding process of decoding the image of the block to be decoded in the AMVP MERGE mode, and the image decoding process is ended.

In the decoding process in the AMVP MERGE mode, the inter prediction process is performed by the predicting unit 216 with a motion compensation being performed in the AMVP mode. Then, the resulting prediction image P and the prediction residual D' are added to each other to obtain the image of the block to be decoded.

Meanwhile, if it is determined at step S214 that Merge_flag ≠ 1, i.e., that Merge_flag = 0, meaning that the mode is a Non-MERGE mode, the process proceeds to step S218.

At step S218, the predicting unit 216 determines whether or not the value of FRUC_flag in the prediction information Pinfo supplied from the decoding unit 211 is 1, that is, whether or not FRUC_flag = 1.

If it is determined at step S218 that FRUC_flag = 1, i.e., that the mode is a FRUC mode, the process proceeds to step S219.

At step S219, various parts of the image decoding apparatus 201 together perform a decoding process of decoding the image of the block to be decoded in the FRUC AMVP mode, and the image decoding process is ended.

In the decoding process in the FRUC AMVP mode, a process similar to the decoding process in the FRUC MERGE mode is performed to derive the motion information, and the image of the block to be decoded is generated. Note, however, that in the FRUC AMVP mode, the prediction motion vector of the block to be decoded is derived using the difference motion vector, since the encoded stream has the difference motion vector stored therein.

In contrast, if it is determined at step S218 that FRUC_flag ≠ 1, i.e., that FRUC_flag = 0, meaning that the mode is not a FRUC mode, the process proceeds to step S220.

At step S220, various parts of the image decoding apparatus 201 together perform a decoding process of decoding the image of the block to be decoded in the AMVP mode, and the image decoding process is ended.

In the decoding process in the AMVP mode, the inter prediction process is performed by the predicting unit 216 with a motion compensation being performed in the AMVP mode. Then, the prediction residual D' and the prediction image P obtained by the inter prediction process are added to each other to obtain the image of the block to be decoded.

Meanwhile, if it is determined at step S213 that the inter prediction process is not to be performed, i.e., that the intra prediction process is to be performed, the process proceeds to step S221.

At step S221, various parts of the image decoding apparatus 201 together perform an intra decoding process of decoding the image of the block to be decoded in the intra prediction mode, and the image decoding process is ended.

In the intra decoding process, the prediction image P is generated by the predicting unit 216 in the intra prediction mode, and the prediction image P and the prediction residual D' are added to each other to obtain the image of the block to be decoded.

In the above-described manner, the image decoding apparatus 201 decodes the block to be decoded in accordance with the coding parameters. Decoding the image in an appropriate mode as described above makes it possible to obtain a high-quality image even with a small amount of codes of the encoded stream.

### <Description of FRUC MERGE Mode Decoding Process>

Next, a FRUC MERGE mode decoding process, which corresponds to the process of step S216 in FIG. 11, will now be described below. That is, with reference to a flowchart of FIG. 12, the FRUC MERGE mode decoding process performed by the image decoding apparatus 201 will now be described below. Note that this FRUC MERGE mode decoding process is performed individually for each of the blocks to be decoded.

At step S251, the inverse quantization unit 212 subjects the quantized transform coefficient levels level obtained by the process of step S211 in FIG. 11 to inverse quantization to derive the transform coefficients Coeff_IQ, and supplies the transform coefficients Coeff_IQ to the inverse transformation unit 213.

At step S252, the inverse transformation unit 213 subjects the transform coefficients Coeff_IQ supplied from the inverse quantization unit 212 to inverse orthogonal transformation or the like, and supplies the resulting prediction residual D' to the computation unit 214.

At step S253, the predicting unit 216 determines whether or not the block to be decoded is a P-slice block on the basis of the prediction information Pinfo supplied from the decoding unit 211 or the like.

If it is determined at step S253 that the block to be decoded is not a P-slice block, the process proceeds to step S254.

At step S254, the predicting unit 216 checks the reference relationship of the picture to be encoded.

At step S255, the predicting unit 216 determines whether or not the bilateral matching method can be employed from the reference relationship, on the basis of a result of checking the reference relationship of the picture to be encoded at step SS254. For example, the predicting unit 216 determines that the bilateral matching method cannot be employed in the case where there is only the same POC number of the reference frame, and determines that the bilateral matching method can be employed in the case where there are different POC numbers of the reference frames.

If it is determined at step S255 that the bilateral matching method can be employed, the process proceeds to step S256.

At step S256, the predicting unit 216 acquires FRUC_Mode_flag.

Specifically, in the case where the block to be decoded is not a P-slice block, at step S211 in FIG. 11, FRUC_Mode_flag is read from the encoded stream by the decoding unit 211, and the prediction information Pinfo, including read FRUC_Mode_flag, is supplied from the decoding unit 211 to the predicting unit 216. The predicting unit 216 acquires FRUC_Mode_flag from the prediction information Pinfo thus supplied.

At step S257, the predicting unit 216 determines whether or not the bilateral matching is to be performed on the basis of FRUC_Mode_flag. It is determined that the bilateral matching is to be performed in the case where the value of FRUC_Mode_flag is 1, for example.

If it is determined at step S257 that the bilateral matching is to be performed, the predicting unit 216 derives the motion information with the bilateral matching method at step S258. As a result, the prediction motion vectors are obtained as the motion information of the block to be decoded.

At step S259, on the basis of the motion information, i.e., the prediction motion vectors, derived by the process of step S258, the predicting unit 216 performs a motion compensation to generate the prediction image P, and supplies the prediction image P to the computation unit 214.

For example, the predicting unit 216 reads, as reference pictures, two decoded images indicated by the reference image identification information from the frame memory 215, and generates the prediction image P with a motion compensation using a block indicated by the prediction motion vector in each of the reference pictures.

After the prediction image P is obtained in the above-described manner, the process proceeds to step S262.

In contrast, if it is determined at step S257 that the bilateral matching is not to be performed, or if it is determined at step S255 that the bilateral matching cannot be employed, or if it is determined at step S253 that the block to be decoded is a P-slice block, a process of step S260 is performed.

At step S260, the predicting unit 216 derives the motion information with the template matching method. As a result, the prediction motion vector is obtained as the motion information of the block to be decoded.

At step S261, on the basis of the motion information, i.e., the prediction motion vector, derived by the process of step S260, the predicting unit 216 performs a motion compensation to generate the prediction image P, and supplies the prediction image P to the computation unit 214.

For example, the predicting unit 216 reads, as a reference picture, one decoded image indicated by the reference image identification information from the frame memory 215, and determines an image of a block indicated by the prediction motion vector in the reference picture to be the prediction image P.

After the prediction image P is obtained in the above-described manner, the process proceeds to step S262.

After the prediction image P is generated by the process of step S259 or step S261, a process of step S262 is performed.

At step S262, the computation unit 214 adds the prediction residual D' supplied from the inverse transformation unit 213 to the prediction image P supplied from the predicting unit 216 to derive a local decoded image Rec. The computation unit 214 uses the obtained local decoded image Rec to reconstruct a decoded image on a picture basis, and outputs the obtained decoded image to an outside of the image decoding apparatus 201. In addition, the computation unit 214 supplies the local decoded image Rec to the frame memory 215.

At step S263, the frame memory 215 uses the local decoded image Rec supplied from the computation unit 214 to reconstruct a decoded image on a picture basis, and holds the reconstructed decoded image in the buffer within the frame memory 215. After the decoded image is obtained in the above-described manner, the FRUC MERGE mode decoding process is ended.

In the above-described manner, the image decoding apparatus 201 derives the motion information using the FRUC mode, and decodes the block to be decoded. A reduction in the amount of codes of the encoded stream can be achieved, and an improvement in the coding efficiency can be achieved, by thus using the FRUC mode and deriving the motion information on the decoding side.

Also at step S219 in FIG. 11, a process similar to the FRUC MERGE mode decoding process, which has been described above with reference to FIG. 12, is performed. Note, however, that in the FRUC AMVP mode, the prediction motion vector of the block to be decoded is derived using the difference motion vector, since the encoded stream has the difference motion vector stored therein.

In addition, the image decoding apparatus 201 is capable of determining whether or not the bilateral matching method can be employed from the reference relationship of the picture to be encoded, and, in the case where the bilateral matching method cannot be employed, automatically adopting the template matching method as the method for deriving the motion information. Thus, the aforementioned transmission of a useless code can be avoided to achieve an additional improvement in the coding efficiency.

Further, the image decoding apparatus 201 eliminates the need to try the bilateral matching method to calculate the RD cost in the case where the bilateral matching method cannot be employed. Specifically, in a conventional encoding process in the FRUC MERGE mode, the RD cost is calculated to determine which of the template matching method and the bilateral matching method is to be employed in the case where the object is not a P-slice.

In contrast, the image decoding apparatus 201 is capable of omitting to perform a process of calculating the RD cost in the case where the bilateral matching method cannot be employed, by determining whether or not the bilateral matching method can be employed as in the FRUC MERGE mode decoding process illustrated in FIG. 12. Therefore, the image decoding apparatus 201 is able to achieve a corresponding reduction in throughput due to omitting to perform the process of calculating the RD cost.

Here, if information indicating that the bilateral matching method is to be employed were included in the bit stream, a decoder might cause vagueness in a decoding process due to an inability to employ the bilateral matching method. If this happened, different decoders might produce different processing results.

In contrast, the image encoding apparatus 11 and the image decoding apparatus 201 according to the present embodiment determine whether or not the bilateral matching method can be employed on the basis of the reference relationship of the picture to be encoded, and are thus able to prevent different decoders from producing different processing results, and to ensure that a decoding process will be performed accurately.

As described above, in each of step S94 in FIG. 9 and step S255 in FIG. 12, it is determined whether or not the bilateral matching method can be employed on the basis of the reference relationship of the picture to be encoded. Note, however, that this determination may not necessarily be performed on the basis of the reference relationship of the picture to be encoded. That is, it may alternatively be determined whether or not the bilateral matching method can be employed on the basis of a criterion other than the reference relationship of the picture to be encoded.

### <Syntax of Slice Header>

FIG. 13 illustrates an example syntax of the slice header. Note that, in FIG. 13, only a portion thereof that is needed to describe the determination of whether or not the bilateral matching method can be employed is extracted, and a number at a left end of each line is a line number provided for the sake of convenience in description.

For example, a third line indicates that a determination of a slice type is to be performed (which corresponds to, for example, step S91 in FIG. 9 and step S253 in FIG. 12). For example, in the case of a P-slice or a B-slice, a flag, num_ref_idx_active_override_flag, for indicating the number of reference frames as illustrated on a fourth line is included.

Meanwhile, num_ref_idx_10_active_minus1, which is illustrated on a sixth line, represents a maximum number of reference indices in list 0 minus 1, and it is determined whether or not the bilateral matching method can be employed depending on whether or not this is 0. Details of num_ref_idx_10_active_minus1 are presented in FIG. 14.

Meanwhile, num_ref_idx_l1_active_minus1, which is illustrated on an eighth line, represents a maximum number of reference indices in list 1 minus 1, and it is determined whether or not the bilateral matching method can be employed depending on whether or not this is 0. Details of num_ref_idx_l1_active_minus1 are presented in FIG. 15.

Note that this determination requires the knowledge of the POCs of reference frames, and the POC is described in "8.3.1 Decoding process for picture order count" in the specifications of HEVC. For example, a function PicOrderCnt(picX) is specified as illustrated on a second line in FIG. 16. Meanwhile, a function DiffPicOrderCnt(picA, picB) calculates a difference in POC between picA and picB as illustrated on a fourth line in FIG. 16. In addition, as illustrated on a fifth line in FIG. 16, a difference between the POC of index 0 in list 0 and the POC of index 1 in list 1 is calculated.

### <Syntax of Coding Unit>

FIGS. 17 to 21 illustrate an example syntax of the coding unit. Note that, in each of FIGS. 17 to 21, a number at a left end of each line is a line number provided for the sake of convenience in description. While the coding unit and the PU (Prediction Unit) have different sizes in HEVC, an integration of the sizes thereof (only PART_2Nx2N) is being studied.

For example, it is determined whether or not the mode is a SKIP mode as illustrated on a seventh line in FIG. 17, and if the mode is a SKIP mode, a 49th line in FIG. 18 is read in accordance with prediction_unit(x0, y0, nCbS, nCbS) on an eighth line in FIG. 17. Meanwhile, if the mode is not a SKIP mode, the 49th line in FIG. 18 is read in accordance with prediction_unit(x0, y0, nCbS, nCbS) on a 35th line in FIG. 18.

Then, it is determined whether or not the bilateral matching method can be employed in accordance with conditions illustrated on a 51st line to a 64th line in FIG. 19. In addition, similarly, in the case of a MERGE mode, it is determined whether or not the bilateral matching method can be employed in accordance with conditions illustrated on a 71st line in FIG. 19 to an 84th line.

Here, there is a technique called Current Reference Picture (CRP) or Intra Block Copy (IBC). In related art, the POC number of a reference picture is different from that of a current picture, but when CRP or IBC is applied, a reference picture having the same POC number as that of the current picture can be referred to.

For example, in the above-described syntax, a condition as illustrated on a 54th line in FIG. 19 is presented as a condition for not transmitting fruc_merge_mode_flag1. This condition is that the slice type is a B-slice, the number of reference pictures is one in each of list 0 and list 1, and the difference therebetween in the POC number is zero.

However, if CRP or IBC is applied, the number of reference pictures is increased by one, and thus, changing the condition as illustrated on the 54th line in FIG. 19 in a manner illustrated in FIG. 22 is considered. Specifically, a reference picture having a POC number different from that of the current picture is stored in each of RefPicList0[0] and RefPicList1[0] illustrated in FIG. 22, and a reference picture having the same POC as that of the current picture is stored in each of RefPicList0[0] and RefPicList1[0]. Note that the condition for determining whether or not the bilateral matching method can be employed may be appropriately changed as necessary in any other desired manner.

### <Exemplary Configuration of Computer>

Here, the above-described series of processes may be implemented either in hardware or in software. In the case where the series of processes is implemented in software, a program that forms the software is installed onto a computer. Examples of such a computer include a computer having a dedicated hardware configuration, and a general-purpose computer or the like, for example, that, when various programs are installed thereon, becomes capable of performing various functions.

FIG. 23 is a block diagram illustrating an exemplary hardware configuration of a computer that performs the above-described series of processes in accordance with the program.

In the computer, a CPU 501, a ROM (Read Only Memory) 502, and a RAM (Random Access Memory) 503 are connected with each other via a bus 504.

Further, an input/output interface 505 is connected to the bus 504. An input unit 506, an output unit 507, a recording unit 508, a communication unit 509, and a drive 510 are connected to the input/output interface 505.

The input unit 506 includes a keyboard, a mouse, a microphone, an image pickup device, and/or the like. The output unit 507 includes a display, a loudspeaker array, and/or the like. The recording unit 508 includes a hard disk, a nonvolatile memory, and/or the like. The communication unit 509 includes a network interface and/or the like. The drive 510 drives a removable recording medium 511, such as a magnetic disk, an optical disk, a magneto-optical disk, or a semiconductor memory.

In the computer having the above-described configuration, the CPU 501 loads the program recorded on the recording unit 508, for example, into the RAM 503 via the input/output interface 505 and the bus 504, and executes the loaded program to perform the above-described series of processes.

The program to be executed by the computer (the CPU 501) may be recorded on the removable recording medium 511, which may be a packaged medium or the like, for example, and be thus provided. Alternatively, the program may be provided to the computer via a wired or wireless transmission medium, such as a local area network, the Internet, or digital satellite broadcasting.

In the computer, the removable recording medium 511 may be mounted on the drive 510 to allow the program to be installed into the recording unit 508 via the input/output interface 505. Alternatively, the program may be received by the communication unit 509 via the wired or wireless transmission medium and be installed into the recording unit 508. Alternatively, the program may be installed in the ROM 502 or the recording unit 508 beforehand.

Note that the program executed by the computer may be either a program that allows the processes to be performed chronologically in an order as described in the present specification, or a program that allows some of the processes to be performed in parallel or performed at a time when they need be performed, such as when a call has been issued.

Also note that embodiments of the present technology are not limited to the above-described embodiments, and it should be understood that various modifications are possible without departing from the scope of the gist of the present technology.

For example, the present technology may be implemented by cloud computing, in which a single function is realized by a plurality of devices cooperating and sharing processes via a network.

Also note that each of the steps described above with reference to the flowcharts may be performed by a single device, or may alternatively be performed by a plurality of cooperating devices.

Further, in the case where one step includes a plurality of processes, the plurality of processes included in the one step may be performed by a single device, or may alternatively be performed by a plurality of cooperating devices.

Also note that advantageous effects mentioned in the present specification are merely illustrative and not restrictive, and there may be other advantageous effects.

Further, the present technology may have the following configurations.

(1) An image processing apparatus including:
   a predicting unit configured to, when performing a process of generating a prediction image from a block to be encoded using a reference image, determine whether or not a bilateral matching based on reference images at mutually different times may be employed to derive a motion vector of the block with a block matching using the reference image.
(2) The image processing apparatus according to (1) above, in which
   the predicting unit determines whether or not the bilateral matching may be employed on the basis of a reference relationship indicating whether there is only one reference image to be referred to for the block to be encoded or whether there are two such reference images.
(3) The image processing apparatus according to (2) above, in which
   the predicting unit checks the reference relationship in accordance with a picture order count with respect to the reference image, the picture order count indicating an order in which pictures are outputted.
(4) The image processing apparatus according to any one of (1) to (3) above, in which,
   in a case where there is only one reference image to be referred to for the block to be encoded, the predicting unit determines that the bilateral matching may not be employed, and derives the motion vector with a template matching based on the reference image and an image including the block.
(5) The image processing apparatus according to (4) above, in which,
   in a case where there are two reference images to be referred to for the block to be encoded, the predicting unit determines that the bilateral matching may be employed, and derives the motion vector with the bilateral matching if a cost calculated from the motion vector derived with the bilateral matching is less than a cost calculated from the motion vector derived with the template matching.
(6) The image processing apparatus according to (5) above, in which,
   even when it has been determined that the bilateral matching may be employed, the predicting unit derives the motion vector with the template matching if the cost calculated from the motion vector derived with the bilateral matching is not less than the cost calculated from the motion vector derived with the template matching.
(7) The image processing apparatus according to any one of (1) to (6) above, in which
   the predicting unit generates the prediction image of the block on the basis of the motion vector.
(8) An image processing method including:
   a step of, when performing a process of generating a prediction image from a block to be encoded using a reference image, determining whether or not a bilateral matching based on reference images at mutually different times may be employed to derive a motion vector of the block with a block matching using the reference image.

### [Reference Signs List]

11 Image encoding apparatus, 21 Control unit, 30 Predicting unit, 51 Candidate acquisition unit, 52 Bilateral matching processing unit, 53 Sub-block candidate acquisition unit, 54 Bilateral matching processing unit, 91 Candidate acquisition unit, 92 Template matching processing unit, 93 Sub-block candidate acquisition unit, 94 Template matching processing unit, 201 Image decoding apparatus, 211 Decoding unit, 216 Predicting unit

## Claims

1. An image processing apparatus comprising:
a predicting unit configured to, when performing a process of generating a prediction image from a block to be encoded using a reference image, determine whether or not a bilateral matching based on reference images at mutually different times may be employed to derive a motion vector of the block with a block matching using the reference image.

2. The image processing apparatus according to claim 1, wherein
the predicting unit determines whether or not the bilateral matching may be employed on a basis of a reference relationship indicating whether there is only one reference image to be referred to for the block to be encoded or whether there are two such reference images.

3. The image processing apparatus according to claim 2, wherein
the predicting unit checks the reference relationship in accordance with a picture order count with respect to the reference image, the picture order count indicating an order in which pictures are outputted.

4. The image processing apparatus according to claim 2, wherein,
in a case where there is only one reference image to be referred to for the block to be encoded, the predicting unit determines that the bilateral matching may not be employed, and derives the motion vector with a template matching based on the reference image and an image including the block.

5. The image processing apparatus according to claim 4, wherein,
in a case where there are two reference images to be referred to for the block to be encoded, the predicting unit determines that the bilateral matching may be employed, and determines to employ the bilateral matching if a cost calculated from the motion vector derived with the bilateral matching is less than a cost calculated from the motion vector derived with the template matching.

6. The image processing apparatus according to claim 5, wherein,
even when it has been determined that the bilateral matching may be employed, the predicting unit derives the motion vector with the template matching if the cost calculated from the motion vector derived with the bilateral matching is not less than the cost calculated from the motion vector derived with the template matching.

7. The image processing apparatus according to claim 1, wherein
the predicting unit generates the prediction image of the block on a basis of the motion vector.

8. An image processing method comprising:
a step of, when performing a process of generating a prediction image from a block to be encoded using a reference image, determining whether or not a bilateral matching based on reference images at mutually different times may be employed to derive a motion vector of the block with a block matching using the reference image.
